(19) Europäisches Patentamt
European Patent Office
Office européen des brevets

(11) Veröffentlichungsnummer: **0 051 187**
**B1**

(12) # EUROPÄISCHE PATENTSCHRIFT

(45) Veröffentlichungstag der Patentschrift: **28.03.84**

(51) Int. Cl.³: **C 09 B 23/14**, C 09 B 23/04, D 21 H 3/80, D 06 P 1/41

(21) Anmeldenummer: **81108411.0**

(22) Anmeldetag: **16.10.81**

(54) **Kationische Styrylfarbstoffe, ihre Herstellung und ihre Verwendung zum Färben von natürlichen und synthetischen kationisch anfärbbaren Substraten.**

(30) Priorität: **30.10.80 DE 3040911**

(43) Veröffentlichungstag der Anmeldung: **12.05.82 Patentblatt 82/19**

(45) Bekanntmachung des Hinweises auf die Patenterteilung: **28.03.84 Patentblatt 84/13**

(84) Benannte Vertragsstaaten: **CH DE FR GB LI**

(56) Entgegenhaltungen:
**FR - A - 1 372 691**
**GB - A - 2 026 522**
**US - A - 3 257 394**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Beecken, Hermann, Dr., Curiestrasse 1, D-5060 Bergisch-Gladbach 2 (DE)**

**EP 0 051 187 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Kationische Styrylfarbstoffe, ihre Herstellung und ihre Verwendung zum Färben von natürlichen und synthetischen kationisch anfärbbaren Substraten

Gegenstand der vorliegenden Erfindung sind Farbstoffe der allgemeinen Formel

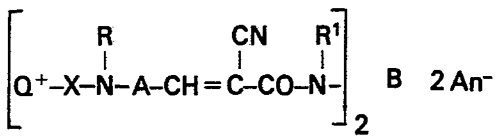 I,

worin

$Q^+$ eine kationische Gruppierung,

X eine gegebenenfalls verzweigte Kette der Formel $C_nH_{2n}$, $C_nH_{2n}$–O–$C_mH_{2m}$, $C_nH_{2n}$–O–CO–$C_mH_{2m}$ oder $C_nH_{2n}$–O–CO–$CH_2$, die durch 1 oder 2 Cl, Hydroxy, $C_1$- bis $C_4$-Alkoxy oder Phenyl substituiert sein kann,

m und n unabhängig voneinander 2, 3 oder 4,

R Wasserstoff, Alkyl, Alkenyl, Aralkyl, Aryl, einen Rest der Formel –X–$Q^+$ $An^-$ oder durch Ringschluss mit –X–$Q^+$ und dem N-Atom einen Heterocyclus der Formel

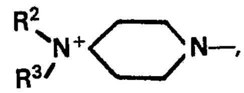

$R^2$ Wasserstoff, Alkyl, Alkenyl oder Aralkyl,

$R^3$ Alkyl oder

$R^2$ und $R^3$ gemeinsam $(CH_2)_4$ oder $(CH_2)_5$,

A eine 1,4-Arylengruppe, die gegebenenfalls durch Ringschluss mit N–R ein anelliertes Ringsystem ergibt,

$R^1$ Wasserstoff oder Alkyl,

B 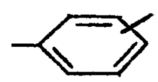 , 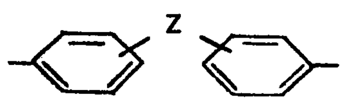 , 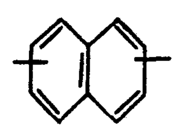

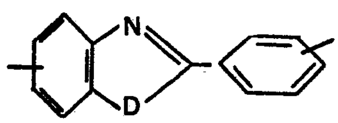 oder 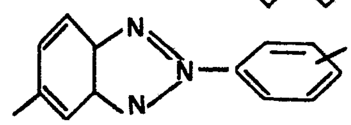

Z eine direkte Bindung oder ein Bindeglied aus der Reihe O,

S, 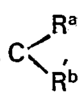, $(CH_2)_2$, CH=CH, $CH_2O$, $CH_2OCH_2$,

$NR^a$, N=N, $NR^aCO$, $NR^aCONR^a$, $NR^aCO(CH_2)_{1-4}CONR^a$, $CONR^aCO$, NH–CO–CO–NH, $NR^aSO_2$, $CONR^a$

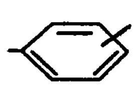 $NR^aCO$, $NR^aCO$– 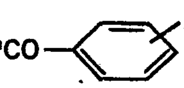 $CONR^a$

CO–NH–NH–CO und 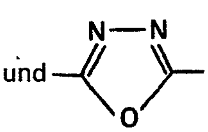

$R^a$ und $R^b$ unabhängig voneinander Wasserstoff, $C_1$- bis $C_2$-Alkyl

und im Falle 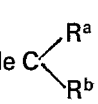 auch gemeinsam $(CH_2)_4$ oder $(CH_2)_5$,

D O, S oder $NR^a$ und

$An^-$ ein Anion bezeichnen, und

die cyclischen und acyclischen Substituenten, Bindeglieder und Brücken nichtionische Reste tragen können, sowie deren Herstellung und Verwendung zum Färben von natürlichen und synthetischen kationisch anfärbbaren Substraten und Massen, vorzugsweise zum Färben, Beschreiben und Bedrucken cellulosehaltiger Materialien, insbesondere von Papier in der Masse und in der Oberfläche.

Als kationische Gruppierungen $Q^+$ gelten die folgenden, bei extern-kationischen Farbstoffen üblichen Gruppen:

Ammonium, Cycloammonium, Hydrazinium, verethertes Hydroxylammonium, Sulfonium und Isothiuronium, wobei neben Alkenyl, Aralkyl, Aryl und $C_5$- bis $C_6$-Cycloalkyl vorzugsweise Wasserstoff und Alkyl als Substituenten an N, S und O Verwendung finden.

Alkyl bezeichnet insbesondere einen $C_1$- bis $C_4$-Alkyl-,

Alkenyl einen $C_3$–$C_5$-Alkenyl- und

Aralkyl einen Aryl-$C_1$- bis -$C_3$-alkylrest, wobei die gegebenenfalls verzweigten Alk(en)ylreste zusätzlich durch Halogen (Fluor, Brom, vorzugsweise Chlor), Cyan, Hydroxy, Amino, Formylamino, $C_1$- bis $C_3$-Alkylcarbonylamino, Phenylcarbonylamino, $C_1$- bis $C_4$-Alkyloxy, $C_1$- bis $C_4$-Alkyloxycarbonyl, $C_1$- bis $C_3$-Alkylcarbonyloxy, Aryloxy oder Aryl-$C_1$- bis -$C_3$-alkyloxy substituiert sein können.

Aryl bezeichnet vorzugsweise Phenyl, das gegebenenfalls als nichtionische Substituenten $C_1$- bis $C_4$-Alkyl, $C_1$- bis $C_4$-Alkyloxy, Cyan, $C_1$- bis $C_4$-Alkylcarbonyl, $C_1$- bis $C_4$-Alkylcarbonyloxy,

$C_1$- bis $C_4$-Alkyloxycarbonyl, $C_1$- bis $C_3$-Alkylcarbonylamino, Halogen (Fluor, Brom, vorzugsweise Chlor) oder Trifluormethyl trägt.

Unter einer 1,4-Arylengruppe wird neben 1,4-Naphthylen vorzugsweise 1,4-Phenylen verstanden, das gegebenenfalls 1–2 Substituenten aus der Reihe $C_1$- bis $C_2$-Alkyl, $C_1$- bis $C_2$-Alkoxy, Halogen (Fluor, Brom, vorzugsweise Chlor), $C_1$- bis $C_2$-Alkyloxycarbonyl, $C_1$- bis $C_2$-Alkylcarbonyloxy, $C_1$- bis $C_2$-Alkylcarbonylamino, Cyan, $CF_3$ oder Nitro enthält.

Bei den anellierten Ringsystemen, wie sie aus einem Ringschluss der 1,4-Arylengruppe mit dem Rest R über das gemeinsame N-Atom resultieren, handelt es sich vorzugsweise um gegebenenfalls durch 1–4 $C_1$- bis $C_4$-Alkyl und/oder 1–2 $C_1$- bis $C_4$-Alkoxy- Phenyl, F oder Cl substituierte 2,3-Dihydroindol-, 1,2,3,4-Tetrahydrochinolin- oder 2,3-Dihydro-benz-]b]oxazin-(1,4)-Systeme.

Als anionische Reste $An^-$ kommen die für kationische Farbstoffe üblichen anorganischen und organischen Anionen in Betracht (vgl. z.B. DEOS 2 128 326, Seiten 5–7, und DE-OS 2 520 816, Seiten 4–6). Bevorzugt sind farblose Anionen, die dem betreffenden Farbstoff die für den vorgesehenen Färbevorgang gewünschten Löslichkeitseigenschaften verleihen.

Das Anion ist zumeist durch das Herstellungsverfahren und die evtl. vorgenommene Reinigung der kationischen Verbindung gegeben. Im allgemeinen liegen die Farbstoffe als Halogenide, insbesondere Chloride oder Bromide, oder als Methosulfate, Ethosulfate, Sulfate, Nitrate, Chlorozinkate, Benzo- oder Toluolsulfonate, Naphthalinsulfonate, Acetate, Propionate, Glykolate, Lactate, Acrylate oder Formiate vor. Diese Anionen können in bekannter Weise gegen andere ausgetauscht werden. Hierzu zählt auch die Möglichkeit der Fällung der Farbstoffkationen mit schwerlöslich machenden farblosen Anionen oder mit Farbstoffanionen.

Bevorzugt werden Farbstoffe der Formel

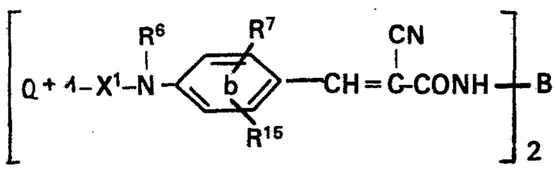

, 2 $An^-$ II,

worin $Q^{+1}$ für 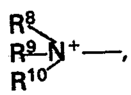 , 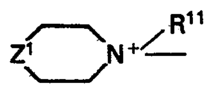 oder 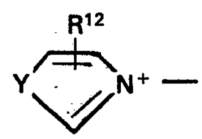 steht und worin

$R^8$, $R^9$, $R^{10}$ und $R^{11}$ unabhängig voneinander für Wasserstoff, $C_1$- bis $C_4$-Alkyl, das durch Hydroxy, Amino, Formylamino, $C_1$- bis $C_4$-Alkoxy, Hydroxy-$C_2$- bis -$C_4$-alkoxy, Phenyl, Phenyloxy, $C_1$- bis $C_3$-Alkylcarbonyloxy, Fluor, Chlor oder Brom substituiert sein kann, und

$R^8$ zusätzlich für $C_1$- bis $C_4$-Alkoxy, Amino, Formylamino, Phenyl, Cyclopentyl oder Cyclohexyl,

$Z^1$ für eine direkte Bindung, $CH_2$, $C_2H_4$, O, S, NH oder N–$C_1$-bis $C_2$-Alkyl,

$R^{12}$ für 1–3 Reste aus der Reihe Wasserstoff, $C_1$- bis $C_4$-Alkyl, Fluor, Chlor oder Brom,

Y für O, S, NH, N-$C_1$- bis $C_2$-Alkyl oder CH=CH,

$X^1$ für gegebenenfalls verzweigtes und/oder durch Hydroxy, $C_1$- bis $C_4$-Alkoxy oder Phenyl substituiertes $C_2$- bis $C_3$-Alkylen und

$R^6$ für gegebenenfalls durch Chlor, Cyan, $C_1$- bis $C_4$-Alkyloxy, Phenyl oder Phenyloxy substituiertes $C_1$- bis $C_4$-Alkyl, für Phenyl oder für den Rest $-X-Q^{+1}]\ An^-$ stehen oder

$R^6$ mit $-X-Q^{+1}$ und dem N-Atom, an das beide gebunden sind, gemeinsam ein Piperazinium-System der Struktur

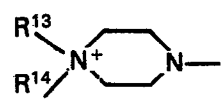

bilden,

$R^{13}$ für Wasserstoff, $C_1$- bis $C_4$-Alkyl, das durch $C_1$- bis $C_4$-Alkyloxy, Hydroxy, $C_1$- bis $C_3$-Alkylcarbonyloxy oder Phenyl substituiert sein kann,

$R^{14}$ für $C_1$- bis $C_4$-Alkyl oder

$R^{13}$ und $R^{14}$ gemeinsam für $(CH_2)_4$ oder $(CH_2)_5$ stehen oder

$R^6$ und $R^7$ gemeinsam mit dem Benzolring und dem Stickstoffatom, an das $R^6$ gebunden ist, Bestandteile eines gegebenenfalls im Heterocyclus durch 1–4 $C_1$- bis $C_4$-Alkylgruppen oder einen Phenylrest substituierten Indolin-, 1,2,3,4-Tetrahydrochinolin- oder 2,3-Dihydro-benzoxazin-(1,4)-Ringsystems sind oder

$R^7$ und $R^{15}$ unabhängig voneinander Wasserstoff, $C_1$- bis $C_2$-Alkyl, $C_1$- bis $C_2$-Alkyloxy, Brom oder Chlor bedeuten, worin B und $An^{(-)}$ die bei Formel (I) angegebene Bedeutung haben, und die Phenylenkerne vorzugsweise als 1,3- oder 1,4-Phenylene vorliegen und die genannten Phenylreste, Phenylen-, Naphthylen- und kondensierten benzoiden Kerne zusätzlich durch 1–3 $C_1$- bis $C_4$-Alkyl-, $C_1$- bis $C_4$-Alkyloxy-, $C_1$- bis $C_4$-Alkyloxycarbonyl-, Cyan- oder $CF_3$-Gruppen und/oder Br oder Cl substituiert sein können.

Von besonderem technischen Interesse sind die Farbstoffe der allgemeinen Formel

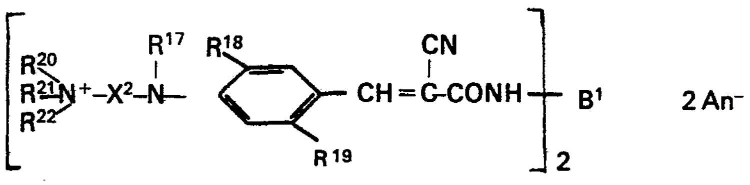 III,

worin

$An^-$ die genannte Bedeutung besitzt,

$R^{20}$, $R^{21}$ und $R^{22}$ unabhängig voneinander für Wasserstoff, $C_1$- bis $C_4$-Alkyl, das durch Hydroxy, Amino, Formylamino, $C_1$- bis $C_4$-Alkoxy, Hydroxy-$C_2$- bis -$C_4$-alkoxy, Phenyl, Phenoxy, $C_1$- bis $C_3$-Alkylcarbonyloxy oder Chlor substituiert sein kann und

$R^{20}$ zusätzlich für Phenyl oder Cyclohexyl oder

$R^{20}$, $R^{21}$ und $R^{22}$ zusammen mit dem quaternären Stickstoff für gegebenenfalls durch Methyl oder Ethyl substituiertes Pyridinium,

$X^2$ für gegebenenfalls verzweigtes $C_2$- bis $C_3$-Alkylen,

$R^{17}$ für gegebenenfalls durch Cyan, $C_1$- bis $C_4$-Alkyloxy, Phenyl oder Phenyloxy substituiertes $C_1$- bis $C_4$-Alkyl,

$R^{18}$ und $R^{19}$ unabhängig voneinander für Wasserstoff, $C_1$- bis $C_2$-Alkyl, $C_1$- bis $C_2$-Alkyloxy oder Chlor oder

$R^{17}$ und $R^{18}$ gemeinsam für die zur Bildung eines Dihydroindol-, 1,2,3,4-Tetrahydrochinolin- oder 2,3-Dihydrobenz[b]-oxazin-(1,4)-Systems erforderlichen Ringglieder, insbesondere für die Glieder $CH_2CH(CH_3)$, $C(CH_3)_2CH(CH_3)$, $CH_2CH_2CH(CH_3)$, $CH(CH_3)CH_2C(CH_3)_2$, $OCH_2CH_2$, $OCH_2CH(CH_3)$, $OCH_2CH(C_6H_5)$ oder $O(CH_3)_2CH(CH_3)$ stehen und

$B^1$ 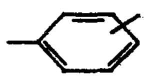 , 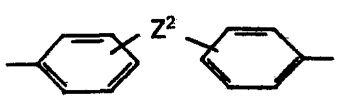 oder 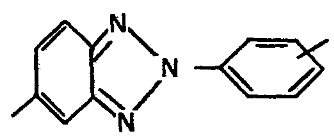 .

bedeuten, wobei die Phenylreste 1,3- oder 1,4-verknüpft sind, zusätzlich 1–2 Reste aus der Reihe $CH_3$, $C_2H_5$, $CH_3O$, $C_2H_5O$ oder Cl tragen können und

$Z^2$ eine direkte Bindung oder die Brückenglieder

$(CH_2)_2$, $CH=CH$, 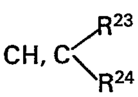 (mit $R^{23}$ und $R^{24}$ unabhängig voneinander gleich H, $CH_3$, $C_2H_5$ oder gemeinsam $(CH_2)_5$), $NR^{25}$ (mit $R^{25}$ = H, $CH_3$, $C_2H_5$), NHCO, NHCONH, CONHCO oder 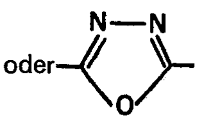 bezeichnet.

Besonders wertvolle Farbstoffe im Rahmen der Erfindung entsprechen der Formel

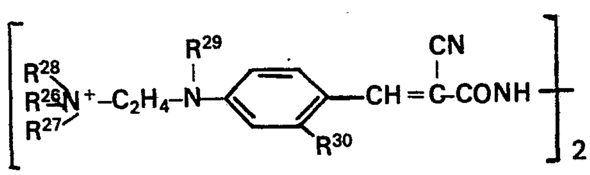 IV,

worin

$An^-$ die genannte Bedeutung besitzt und

$R^{28}$, $R^{26}$ und $R^{27}$ unabhängig voneinander gleich H, Methyl, Ethyl, Propyl, Butyl, Hydroxyethyl, Hydroxypropyl, Formylaminoethyl, Formylaminopropyl, Aminoethyl, Aminopropyl oder

$R^{28}$, $R^{26}$ und $R^{27}$ zusammen mit dem quaternären Stickstoff für gegebenenfalls durch Methyl oder Ethyl substituiertes Pyridinium,

$R^{29}$ Methyl, Ethyl, Methoxyethyl, Ethoxyethyl, Cyanethyl, Phenyl, Benzyl, α- oder β-Phenylethyl, Phenyloxyethyl oder Phenyloxypropyl,

$R^{30}$ Wasserstoff oder Methyl und

$B^2$ 1,3- oder 1,4-Phenylen oder einen Rest der Formel

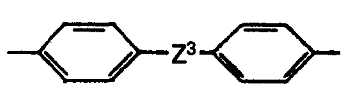

bedeuten, wobei die Phenylenreste durch 1–2 Methyl, Chlor oder Methoxy substituiert sein können und

$Z^3$ eine direkte Bindung oder die Brückenglie-

der $CH_2$, $(CH_2)_2$, $C(CH_3)_2)$, NHCO oder NHCONH bezeichnet.

Die neuen Farbstoffe werden in an sich bekannter Weise hergestellt, indem man Bis-cyanacetamide der Formel

$$\left[\begin{array}{l} \quad CN \qquad R^1 \\ \quad | \qquad\quad | \\ H_2C-CO-N-B- \end{array}\right]_2 B, \qquad V$$

mit Aldehyden der allgemeinen Formel

$$Q^+-X-\underset{}{\overset{R}{\overset{|}{N}}}-A-CHO\ An^- \qquad VI$$

oder deren funktionellen Derivaten (Azomethine, Imoniumsalze usw.) kondensiert,

wobei $R^1$, B, $Q^+$, R, X, A und $An^-$ die vorstehend erläuterten Bedeutungen haben.

Die Kondensationen werden bei Temperaturen zwischen 20 und 140 °C, vorzugsweise im Bereich 50–110 °C, in einem organischen Lösungsmittel durchgeführt. Als solche eignen sich beispielsweise Alkohole, wie Methanol, Ethanol, die Propanole und Butanole, ferner Benzylalkohol, Essigsäureethylester, Benzoesäuremethylester, Ameisensäure, Essigsäure, Essigsäureanhydrid, Dimethylformamid, Dimethylacetamid, Tetramethylharnstoff, Acetonitril, Benzonitril, $C_2$- bis $C_4$-Glykole und deren $C_1$- bis $C_4$-Ether und andere.

Zur Beschleunigung der Knoevenagel-Kondensationsreaktion können basische Katalysatoren zugesetzt werden, wie beispielsweise Triethylamin, Pyridin, Piperidin, N-Ethylpiperidin, N-Methylmorpholin, Alkalicarbonate, Alkaliacetate und Acetate anorganischer oder organischer Stickstoffbasen, wie z.B. Ammoniumacetat oder Piperidinacetat. Geeignete Wahl der Lösungsmittel ergibt unmittelbar stabile Farbstoff-Flüssigeinstellungen. Geeignete Bis-cyanacetamide der Formel V erhält man durch Cyanacetylierung der entsprechenden Diamine $H_2N-B-NH_2$, indem man diese vorteilhaft mit Cyanessigsäuremethyl- oder -ethylester bei erhöhter Temperatur (oberhalb 100 °C) zur Reaktion bringt.

Für die Darstellung geeigneter basischer Aldehyde VI kommen verschiedene Wege in Frage, so die Umsetzung von Ammoniak oder der betreffenden primären, sekundären oder tertiären N-Basen, Hydroxylamin- oder Hydrazinderivate oder cyclischen Stickstoffbasen mit Aldehyden der Formel

$$Hal-X-\overset{R}{\overset{|}{N}}-A-CHO \qquad VII$$

beziehungsweise mit den aromatischen Basen der Formel

$$Hal-X-\overset{R}{\overset{|}{N}}-A-H \qquad VIII$$

und anschliessende Formylierung nach Vilsmeier und Haack, wobei Hal vorzugsweise für Chlor oder Brom steht.

In manchen Fällen kann es auch von Vorteil sein, anstelle der quartären Aldehyde VI tertiäre Aldehyde

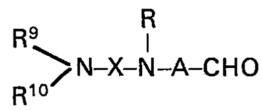

IX oder

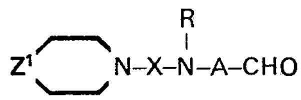

X

(mit $R^9$, $R^{10}$, X, R, A und $Z^1$ in der oben gegebenen Bedeutung), die man ebenfalls leicht aus den entsprechenden aromatischen Basen durch Vilsmeier-Haack-Formylierung gewinnt, zur Kondensation mit den Bis-cyanacetamiden einzusetzen und die Quaternierung bzw. Protonierung als letzten Schritt der Farbstoffsynthese vorzunehmen.

Wiederum andere Fälle legen nahe, nicht von Bis-cyanacetamiden auszugehen, sondern die Brücke B der Farbstoffe als letzten Syntheseschritt zu knüpfen. Dies trifft z.B. für

B = 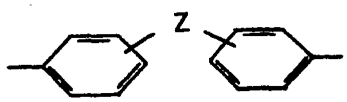 zu, wenn Z = NHCONH oder NHCOCONH ist.

Die zur Darstellung der erfindungsgemässen Farbstoffe erforderlichen Aldehyde bzw. ihre Vorprodukte sind aus der Chemie basischer Methin- bzw. Azofarbstoffe bekannt oder leicht nach analogen Herstellungsmethoden erhältlich. Entsprechende Angaben können zum Beispiel folgendem Schrifttum entnommen werden:

Deutsche Offenlegungsschriften 1 619 394, 1 910 465, 2 011 429,

Deutsche Auslegeschriften 1 103 485, 1 406 841,

BE-PS 583 002, GP-PS 1 287 886, US-PS 3 141 018, 3 424 756 oder 3 987 022.

Weitere Hinweise ergeben sich aus den nachfolgenden Patentbeispielen.

Die erfindungsgemässen Farbstoffe eignen sich zum Färben, Bedrucken und Massefärben von Materialien, die überwiegend oder vollständig aus Polyacrylnitril oder seinen Mischpolymerisaten mit anderen Vinylmonomeren, wie Vinylidencyanid, Vinylidenchlorid, Vinylchlorid, Vinylacetat, Vinylalkohol, Acryl- oder Methacrylester, bestehen, oder aus sauer modifizierten Polyestern oder Polyamiden. Die erhaltenen Färbungen und Drucke, vor allem auf Polyacrylnitril, zeichnen sich durch hohe Allgemeinechtheiten, insbesondere durch hohe Licht-, Nass- und Schweissechtheiten, durch eine hohe Affinität zur Faser und durch eine hohe pH-Stabilität aus.

Die Farbstoffe eignen sich ferner für die übrigen bekannten Anwendungen kationischer Farbstoffe, wie beispielsweise das Färben und Bedrucken von Celluloseacetat, Kokosfasern, Jute, Sisal, Seide und tannierter Baumwolle, Leder, zur Bereitung von Kugelschreiberpasten, unter anderem durch Fällung mit anionischen Farbstoffen, von Stempelfarben und zur Verwendung im Gummidruck.

Besonders hervorzuheben ist das ausgezeichnete Verhalten der erfindungsgemässen Farbstoffe beim Färben von geleimten und ungeleimten Papieren in der Masse, wobei besonders hohe Affinitäten sowohl zu ligninhaltigen (holzschliffhaltigen) als auch zu ligninfreien Papiermassen (z.B. gebleichten Sulfit- und Sulfatzellstoffen) festzustellen sind, so dass sie hervorragend zur Herstellung in der Masse gefärbter Papiere geeignet sind, ohne die anfallenden Abwässer nennenswert mit Farbstoff zu belasten.

Die Farbstoffe besitzen überwiegend sehr gute Löslichkeiten in Wasser und polaren organischen Lösungsmitteln, so dass sie die Herstellung stabiler, hochkonzentrierter Lösungen ermöglichen. Sie werden durch Reduktionsmittel, wie Dithionite oder Sulfite, glatt entfärbt, so dass das Recycling von mit ihnen eingefärbten Altpapieren ohne weiteres möglich ist.

Aus der GB-2 026 522 sind bisquartäre Styrylfarbstoffe, deren quartäre Gruppen sich zwischen zwei Styrylgruppen befinden, und ihre Verwendung zum Färben von Papier bekannt. Im Vergleich zu diesen Farbstoffen zeigen die neuen Farbstoffe eine überraschend hohe Affinität zum Papier.

Beispiel 1

18 g 4,4'-Bis-cyanacetamino-benzanilid und 29 g [N-Ethyl-N-β-(1-pyridinium)-ethyl]-4-aminobenzaldehyd-chlorid werden in 150 ml Ethanol unter Zusatz von 1 ml Piperidin 2 h zum Rückfluss erhitzt. Das Kondensationsprodukt scheidet sich kristallin ab und wird nach Abkühlen der Reaktionsmischung auf Raumtemperatur durch Absaugen, Waschen mit Ethanol und Trocknen bei 80 °C im Vakuumschrank als gelbes Pulver isoliert. Die Ausbeute beträgt 45 g Farbstoffe der Formel:

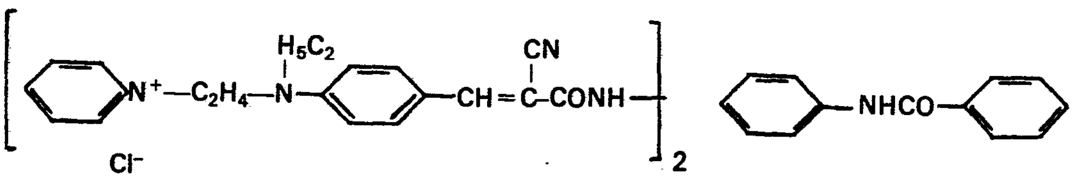

Schmelzpunkt 216–218°. $\lambda_{max}$ = 422 nm in 50%iger Essigsäure.

Der Farbstoff färbt Polyacrylnitril und sauer modifiziertes Polyethylenterephthalat nach den üblichen Verfahren in brillanten, grünstichig gelben Tönen von guter Lichtechtheit bei hervorragendem allgemeinem Echtheitsniveau. Er eignet sich ferner zur Herstellung von Stempelfarben und Kugelschreiberpasten sowie für den Gummidruck. Darüber hinaus gibt er auf Kokosfasern, Jute, Sisal, Seide, Baumwolle, Leder und keratinhaltigen Substraten brillante, echte Gelbfärbungen.

Bei der bevorzugten Verwendung des Farbstoffes zum Färben von holzschliffhaltigen und besonders von ligninfreien Papiermassen, z.B. auf Basis gebleichter Sulfit- oder Sulfatzellstoffe, beobachtet man eine hervorragende Faseraffinität und sehr geringe Abwasseranfärbung. Die eingefärbten Papiere zeigen stark grünstichig gelbe Nuancen hoher Klarheit.

Die zur Synthese des Farbstoffes erforderlichen Ausgangsmaterialien gewinnt man beispielsweise auf folgende Weise:

(a) 4,4'-Bis-cyanacetamino-benzanilid:

Eine Mischung von 461,4 g 4,4'-Diaminobenzanilid, 423 g Cyanessigsäuremethylester und 860 g Dimethylacetamid wird unter Rühren ca. 4–5 h auf 165–170 °C erhitzt, bis kein Methanol mehr abdestilliert und im Dünnschichtchromatogramm (Kieselsäuregel) kein Diaminobenzanilid mehr erkennbar ist und das Monocyanacetyl-produkt nur noch in sehr geringer Menge vorliegt. Darauf entfernt man den Grossteil des Lösungsmittels durch Destillation unter reduziertem Druck, versetzt den Rückstand mit 1,5 l Methanol und rührt 15 min bei Raumtemperatur nach. Durch Absaugen, Waschen mit Methanol und Trocknen bei 80 °C im Vakuum erhält man ca. 580 g 4,4'-Bis-cyanacetamino-benzanilid vom Schmelzpunkt 320 °C, dessen Identität durch das Massenspektrum bestätigt wird (ber. Molgewicht: 361; gefunden m/e = 361 und entsprechende Fragmentierung).

Auf gleiche Weise wurden die übrigen für die Beispiele herangezogenen Bis-cyanacetamide dargestellt und charakterisiert. Dabei wurde zum Teil auf ein besonderes Lösungsmittel verzichtet und stattdessen Cyanessigsäuremethylester oder Cyanessigsäureethylester im Überschuss eingesetzt und dieser aus den Mutterlaugen destillativ in wiederverwendbarer Reinheit zurückgewonnen.

(b) [N-Ethyl-N-β-(1-pyridinium)-ethyl]-4-aminobenzaldehyd-chlorid:

95,2 g N-Ethyl-N-β-chlorethyl-4-aminobenzaldehyd werden in 300 ml trockenem Pyridin ca. 17 h zum Rückfluss (Innentemperatur ca. 120 °C) erhitzt, bis das Dünnschichtchromatogramm vollständige Umsetzung zum quartären Aldehyd anzeigt. Man saugt das auskristallisierte Reaktionsprodukt bei 0 °C ab, wäscht es mit Toluol und trocknet es bei 80 °C i. Vak. Die Ausbeute an rohem quartärem Aldehyd ist nahezu quantitativ, sein Schmelzpunkt liegt bei 149–151 °C.

(c) Zum gleichen Aldehyd gelangt man auch, indem man die quartäre Base wie folgt nach Vilsmeier und Haack formyliert:

39,4 g N-Ethyl-N-β-(1-pyridinium)-ethylanilin-chlorid werden in 50 ml Dimethylformamid auf 70–75 °C erwärmt und unter Rühren bei dieser Temperatur binnen 1 h 25,3 g Phosphoroxychlorid zugetropft. Nach weiterem 4stündigem Rühren bei 75 °C ist die Umsetzung vollständig. Man tropft nun nacheinander 100 ml Ethanol und ca. 30 ml 45%ige Natronlauge bis zum Erreichen von pH 9 hinzu, rührt 1 h nach, entfernt die abgeschiedenen anorganischen Salze durch Absaugen des Reaktionsgemisches. Die Salze werden mit Ethanol gewaschen und die vereinigten Filtrate unter vermindertem Druck vom Lösungsmittel befreit. Zum öligen Rückstand gibt man 250 ml trockenes Isopropanol, rührt einige Zeit bei 50 °C und saugt nochmals eine kleine Menge anorganischer Salze ab. Sie werden mit 50 ml trockenem Methanol gewaschen und der quartäre Aldehyd aus den Filtraten durch Abdestillieren der Lösungsmittel unter reduziertem Druck als durchkristallisierendes viskoses Öl (42,6 g) erhalten, das für die vorgesehenen Umsetzungen keiner weiteren Reinigungsoperationen bedarf.

Nach den unter (b) und (c) beschriebenen, an sich bekannten Verfahrensweisen wurde die Mehrzahl der in den Beispielen verwendeten quartären und tertiären Aldehyde durch entsprechende Variation der Ausgangsverbindungen erhalten. Die übrigen waren entweder als solche beschrieben oder nach Analogmethoden zugänglich.

Beispiel 2

54 g 4,4'-Bis-cyanacetamino-benzanilid und 66 g N-Ethyl-N-β-dimethylaminoethyl-4-aminobenzaldehyd werden in 1 l trockenem Methanol nach Zugabe von 5 ml Piperidin unter Rühren ca. 10 h zum Rückfluss erhitzt, bis der Aldehyd vollständig umgesetzt ist. Man isoliert das abgeschiedene Farbstoffvorprodukt durch Absaugen bei Raumtemperatur, Waschen mit Methanol und Trocknen bei 70 °C im Vakuum. Die Ausbeute beträgt 109 g Vorprodukt der Formel

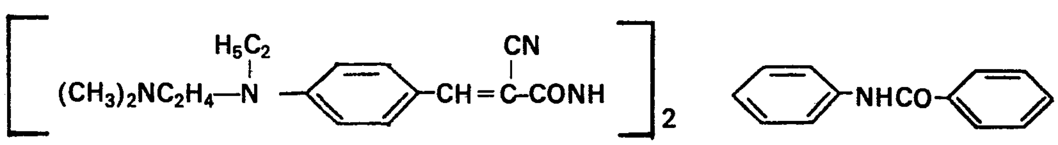

vom Schmelzpunkt 228–230 °C; $\lambda_{max}$ = 424 nm in 50%iger Essigsäure.

Zur Überführung des in Wasser unlöslichen Produktes in einen erfindungsgemässen bis-kationischen Farbstoff werden 30 g desselben in 70 g einer Mischung aus 80 Teilen Milchsäure und 20 Teilen Essigsäure eingetragen und bis zum Eintritt klarer Lösung unter Erwärmen auf 60–80 °C gerührt. Die resultierende Flüssigeinstellung enthält den Farbstoff der Formel:

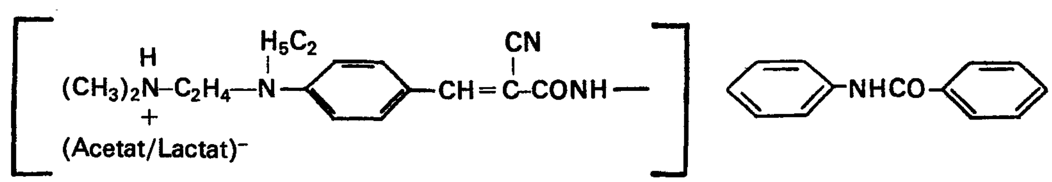

der im Gegensatz zum Vorprodukt leicht wasserlöslich und hervorragend zum Färben geeignet ist, insbesondere von Papierstoffen in der Masse. Hierbei resultieren brillant grünstichig gelb gefärbte Papiere, während die Abwässer selbst bei ligninfreien Papiermassen nicht nennenswert angefärbt werden.

Ersetzt man die Aldehyde und/oder Bis-cyanacetamide in den Beispielen 1 und 2 durch andere anspruchsgemässe Ausgangsverbindungen, so erhält man weitere erfindungsgemässe Farbstoffe, die sich durch gute färberische Eigenschaften gegenüber kationisch anfärbbaren Substraten auszeichnen, vor allem durch hervorragende Affinität zu ligninhaltigen, aber auch besonders zu ligninfreien Papiermassen.

Eine Auswahl ist in den folgenden Tabellen aufgeführt unter Angabe der Farbtöne, die in der Masse gefärbte Papiere auf Basis gebleichten Sulfitzellstoffs durch diese Farbstoffe annehmen.

Tabelle 1

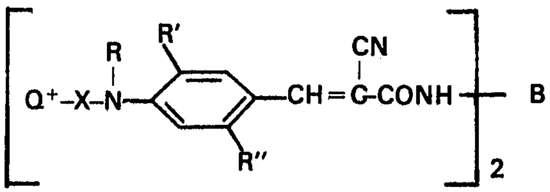 2 $An^-$

| Beisp. Nr. | Q | X | R | R' | R'' | –B– | Farbton von massgefärbtem, gebleichtem Sulfitzellstoff |
|---|---|---|---|---|---|---|---|
| 3 | $(CH_3)_2HN-$ | $(CH_2)_3$ | $C_2H_5$ | H | H | 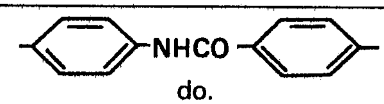 | stark grünstichiges Gelb |
| 4 | do. | do. | $C_6H_5(CH_2)_2)$ | do. | $CH_3$ | do. | do. |
| 5 | do. | $C_2H_4OC_2H_4$ | $C_2H_5$ | do. | do. | do. | do. |
| 6 | $(CH_3)_3N-$ | $C_2H_4$ | $C_2H_5$ | do. | do. | do. | do. |
| 7 | do. | do. | do. | do. | H | do. | do. |
| 8 | $HOC_2H_4N(CH_3)_2-$ | do. | do. | do. | $CH_3$ | do. | do. |
| 9 | $HOC_2H_4N(C_2H_5)_2-$ | do. | do. | do. | H | do. | do. |
| 10 | 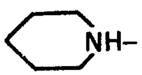 | do. | $CH_3$ | do. | do. | do. | do. |
| 11 | 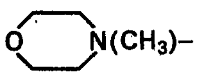 | do. | $C_2H_5$ | do. | do. | do. | do. |
| 12 | 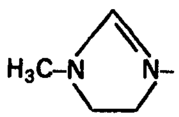 | do. | do. | do. | do. | do. | do. |
| 13 | $(CH_3)_2NH-$ | $C_2H_4$ | $C_2H_5$ | H | H | 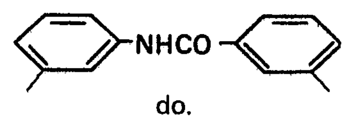 | do. |
| 14 | $(CH_3)_2NC_2H_5-$ | do. | do. | do. | do. | do. | do. |
| 15 | $(CH_3)_2NH-$ | do. | do. | do. | $CH_3$ | 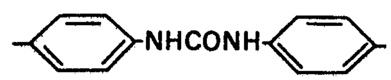 | do. |
| 16 | 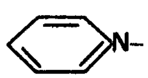 | do. | do. | do. | H | 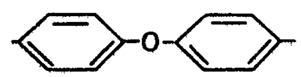 | do. |
| 17 | do. | do. | do. | do. | do. | 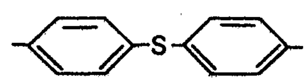 | do. |

(Fortsetzung) Tabelle 1

| Beisp. Nr. | Q | X | R | R′ | R″ | –B– | Farbton von massgefärbtem, gebleichtem Sulfitzellstoff |
|---|---|---|---|---|---|---|---|
| 18 | 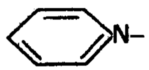 | $C_2H_4$ | $C_2H_5$ | H | H | 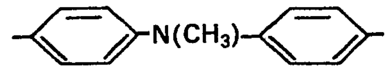 | stark grünstichiges Gelb |
| 19 | do. | do. | do. | do. | do. | 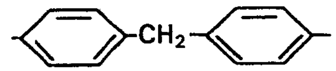 | do. |
| 20 | do. | do. | do. | do. | do. | 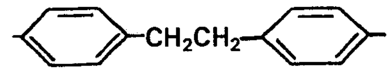 | do. |
| 21 | do. | do. | do. | do. | do. | 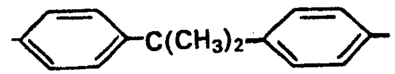 | do. |
| 22 | do. | do. | do. | do. | do. | 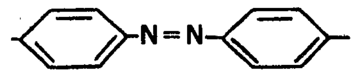 | klares Gelb |
| 23 | do. | do. | do. | do. | do. | 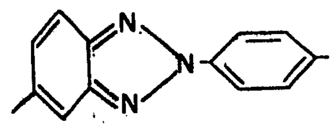 | stark grünstichiges Gelb |
| 24 | do. | do. | do. | do. | do. | 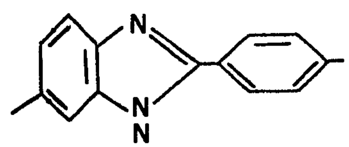 | do. |
| 25 | do. | do. | do. | do. | do. | 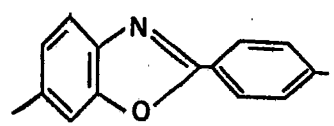 | do. |
| 26 | do. | do. | do. | do. | do. | 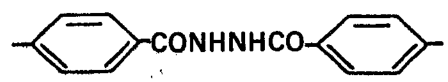 | do. |

(Fortsetzung) Tabelle 1

| Beisp. Nr. | Q | X | R | R′ | R″ | –B– | Farbton von massgefärbtem, gebleichtem Sulfitzellstoff |
|---|---|---|---|---|---|---|---|
| 27 | $(CH_3)_2NH$– | $C_2H_4$ | $C_2H_5$ | H | H | 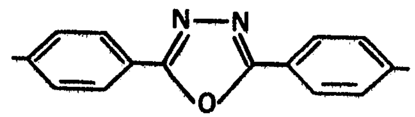 | stark grünstichiges Gelb |
| 28 | do. | do. | do. | do. | do. | 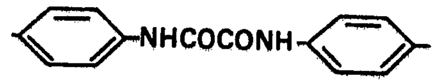 | do. |
| 29 | do. | do. | do. | do. | do. | 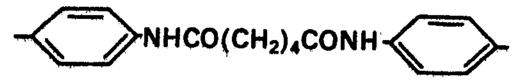 | do. |
| 30 | do. | do. | do. | do. | do. | 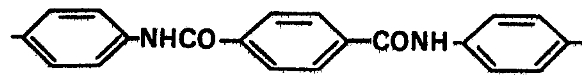 | do. |
| 31 | do. | do. | do. | do. | do. | 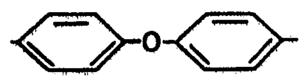 | do. |
| 32 | do. | do. | do. | do. | do. | 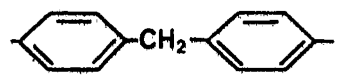 | do. |
| 33 | do. | do. | do. | do. | do. | 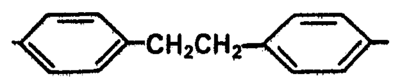 | do. |
| 34 | do. | do. | do. | do. | $CH_3$ | 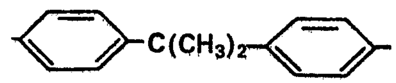 | do. |
| 35 | do. | do. | do. | do. | do. | 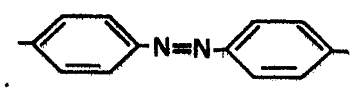 | klares Gelb |
| 36 | do. | do. | do. | do. | do. | 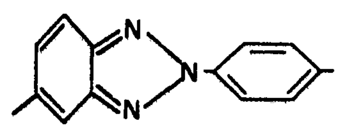 | grünstichiges Gelb |

(Fortsetzung) Tabelle 1

| Beisp. Nr. | Q | X | R | R′ | R″ | –B– | Farbton von massegefärbtem, gebleichtem Sulfitzellstoff |
|---|---|---|---|---|---|---|---|
| 37 | $(CH_3)_2NH–$ | $C_2H_4$ | $C_2H_5$ | H | H | 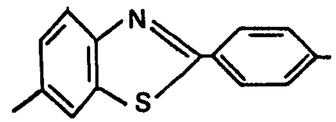 | stark grünst. Gelb |
| 38 | $(HOC_2H_4)_3N–$ | do. | do. | do. | do. | 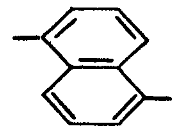 | grünstichiges Gelb |
| 39 | $(CH_3)_2NH–$ | do. | do. | do. | do. | 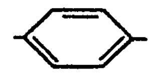 | do. |
| 40 | do. | do. | do. | do. | do. | 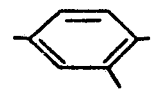 | stark grünst. Gelb |
| 41 | do. | do. | do. | do. | do. | 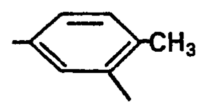 | do. |
| 42 | do. | do. | do. | do. | do. | 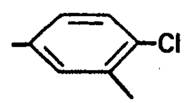 | do. |
| 43 | do. | do. | do. | do. | $CH_3$ | 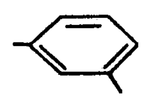 | do. |
| 44 | do. | do. | $C_4H_9$ | do. | H | 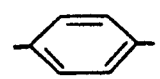 | do. |
| 45 | $(CH_3)_3N–$ | do. | $C_2H_5$ | do. | $CH_3$ | do. | do. |
| 46 | $H_2N–N(CH_3)_2–$ | do. | do. | do. | do. | do. | stark grünst. Gelb |

(Fortsetzung)

| Beisp. Nr. | Q | X | R | R′ | R″ | –B– | Farbton von massgefärbtem, gebleichtem Sulfitzellstoff |
|---|---|---|---|---|---|---|---|
| 47 | $CH_3ON(CH_3)_2$– | $C_2H_4$ | $C_2H_5$ | H | $CH_3$ | 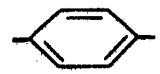 | stark grünstichiges Gelb |
| 48 | $(C_2H_5)_2NH$– | do. | do. | do. | H | do. | do. |
| 49 | $CH_3OC_2H_4N(CH_3)_2$– | do. | do. | do. | do. | do. | do. |
| 50 | $C_4H_9N(CH_3)_2$– | do. | do. | do. | do. | do. | do. |
| 51 | $HOC_2H_4N(CH_3)_2$– | do. | do. | do. | $CH_3$ | do. | do. |
| 52 | $H_2N(CH_2)_3N(CH_3)_2$– | do. | do. | do. | do. | do. | do. |
| 53 | $OHC–NH(CH_2)_3N(CH_3)_2$– | do. | do. | do. | do. | do. | do. |
| 54 | 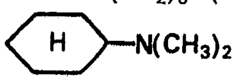 | do. | do. | do. | H | do. | do. |
| 55 | 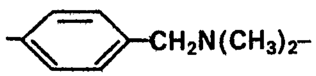 | do. | do. | do. | do. | do. | do. |
| 56 | $(CH_3)_2NH$– | do. | $C_6H_5CH_2CH_2$ | do. | $CH_3$ | do. | do. |
| 57 | do. | $(CH_2)_3)$ | do. | do. | do. | do. | do. |
| 58 | 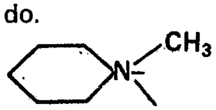 | $C_2H_4$ | $C_2H_5$ | do. | do. | do. | do. |
| 59 | $(C_2H_5)_3N$– | do. | $CH_3$ | do. | $OCH_3$ | do. | do. |
| 60 | $(CH_3)_2NH$– | do. | $C_2H_5$ | do. | $CH_3$ | 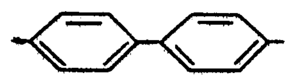 | grünstichiges Gelb |
| 61 | do. | do. | do. | do. | H | 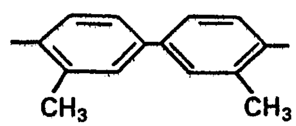 | do. |
| 62 | do. | do. | do. | do. | do. | 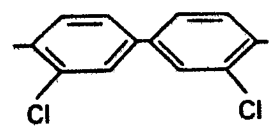 | do. |
| 63 | do. | do. | do. | do. | do. | 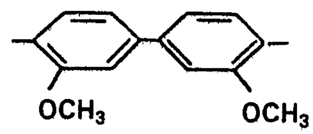 | do. |

(Fortsetzung)

| Beisp. Nr. | Q | X | R | R′ | R″ | –B– | Farbton von massgefärbtem, gebleichtem Sulfitzellstoff |
|---|---|---|---|---|---|---|---|
| 64 | $(CH_3)_2HN-$ | $C_2H_4$ | $C_2H_5$ | H | $CH_3$ | 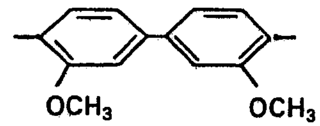 | grünstichiges Gelb |
| 65 | 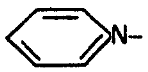 | do. | do. | do. | H | do. | do. |
| 66 | do. | do. | do. | do. | $CH_3$ | do. | do. |
| 67 | $C_6H_5OC_2H_4N(CH_3)_2-$ | do. | do. | do. | H | 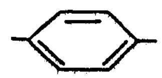 | stark grünst. Gelb |
| 68 | 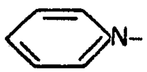 | $CH_2CH(CH_3)$ | do. | do. | $CH_3$ | do. | do. |
| 69 | do. | $CH_2CH(C_2H_5)$ | do. | do. | H | do. | do. |
| 70 | do. | $C_2H_4$ | $C_6H_5CH_2$ | do. | do. | do. | do. |
| 71 | do. | do. | $C_6H_5OC_2H_4$ | do. | do. | do. | do. |
| 72 | do. | do. | $C_2H_5OC_2H_4$ | do. | $CH_3$ | 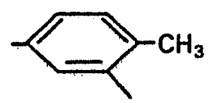 | do. |
| 73 | do. | do. | $NC-C_2H_4$ | do. | do. | 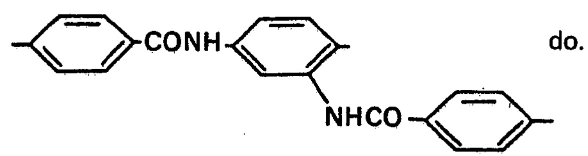 | do. |
| 74 | do. | do. | Q–X | do. | do. | 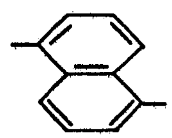 | grünstichiges Gelb |
| 75 | do. | do. | do. | do. | do. | 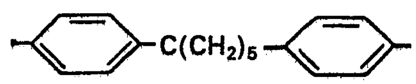 | stark grünst. Gelb |
| 76 | $(CH_3COOC_2H_4)_3N-$ | do. | $C_2H_5$ | do. | do. | 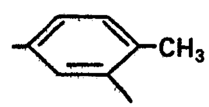 | do. |

(Fortsetzung)

| Beisp. Nr. | Q | X | R | R′ | R″ | –B– | Farbton von massgefärbtem, gebleichtem Sulfitzellstoff |
|---|---|---|---|---|---|---|---|
| 77 | 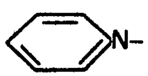 | $C_2H_4$ | H | $CH_3O$ | $CH_3O$ | 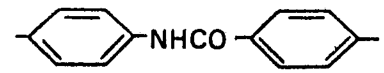 | stark grünst. Gelb |
| 78 | $H_2NC_2H_4NH_2$– | do. | $C_2H_5$ | H | $CH_3$ | do. | do. |
| 79 | $HOC_2H_4OC_2H_4N(CH_3)_2$– | do. | do. | do. | do. | 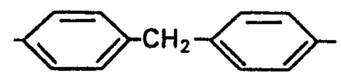 | do. |
| 80 | 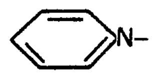 | do. | $CH_3$ | do. | Cl | do. | do. |

Beispiel 81

25,6 g N,N′-Bis-cyanacetyl-2,4-diamino-toluol und 68,9 g N-β-(1-Pyridinium)-ethyl-2,2,4-trimethyl- 6-formyl- 1, 2, 3, 4-tetrahydrochinolinchlorid werden in 100 g Propylenglykol unter Zusatz von 5 g Piperidin ca. 4 h unter Rühren auf 60–70 °C erhitzt. Man erhält 200 g einer klaren, tiefgelben Lösung des Farbstoffes der Formel

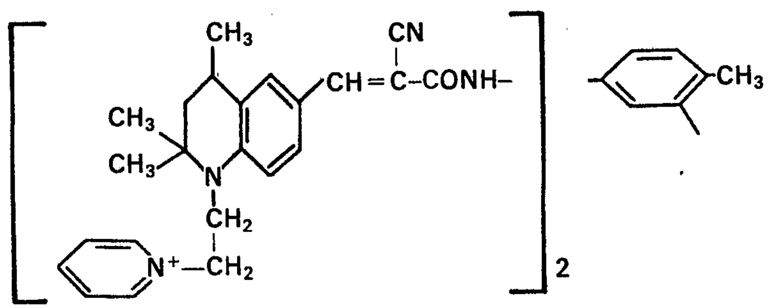

$2\,Cl^-$

in Propylenglykol ($\lambda_{max}$ = 422 nm in 50%iger Essigsäure), aus der durch Zusatz von 50 g Wasser eine niedrigviskose, stabile und ca. 36%ige Flüssigeinstellung bereitet wird. Sie ist beliebig mit Wasser verdünnbar und färbt gebleichten Sulfitzellstoff in der Masse mit hervorragender Affinität in klarem Gelbton, wobei nur Spuren des Farbstoffes an das Abwasser abgegeben werden.

Ähnliche Eigenschaften zeigen die in Tabelle 2 aufgeführten Farbstoffe:

Tabelle 2

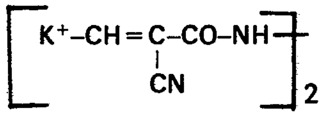

| Beisp. Nr. | K | –B– | Farbston von massegefärbtem, gebleichtem Sulfitzellstoff. |
|---|---|---|---|
| 82 | 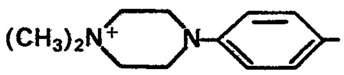 | 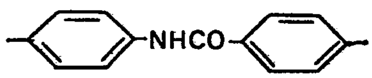 | stark grünstichiges Gelb |
| 83 | 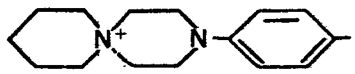 | 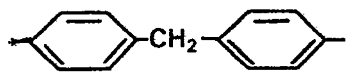 | do. |
| 84 | 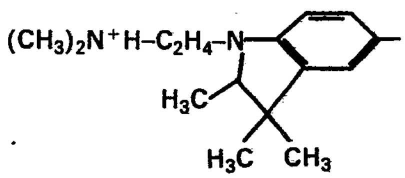 | 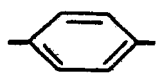 | klares Gelb |
| 85 | 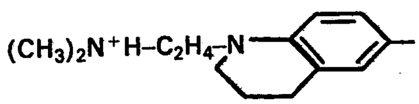 | do. | do. |
| 86 | 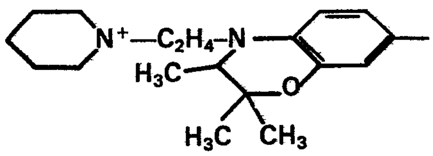 | do. | do. |
| 87 | 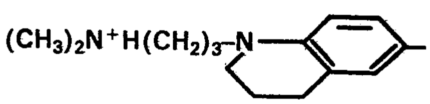 | 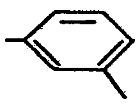 | grünstichig gelb |

Beispiel 88

In ein wässriges Färbebad, das pro 1000 ml 0,75 g 30%ige Essigsäure, 0,38 g Natriumacetat und 0,15 g des in Beispiel 1 beschriebenen Farbstoffes enthält, bringt man bei 40 °C die dem Flottenverhältnis 1:40 entsprechende Menge Polyacrylnitrilfasern ein, erhitzt innerhalb von 20–30 min zum Sieden und färbt 30–60 min bei Siedetemperatur. Das anschliessend gespülte und getrocknete Färbegut weist eine brillante, grünstichig gelbe Färbung auf, die sich allgemein durch gute Echtheiten, insbesondere durch gute Licht-, Wasch- und Dekaturechtheit auszeichnet.

Färbt man mit dem gleichen Farbstoff unter den Bedingungen des sogenannten NEOCHROM-Prozesses nassgesponnene Polyacrylnitrilfasern im Gelzustand, so erhält man ebenfalls Färbungen von vergleichbarem Echtheitsniveau.

Beispiel 89

Eine aus 15 g des Farbstoffes gemäss Beispiel 41, 15 g Polyacrylnitril und 70 g Dimethylformamid bereitete Stammlösung wird einer üblichen Spinnlösung von Polyacrylnitril in der gewünschten Menge zugesetzt und die gefärbte Lösung in bekannter Weise versponnen. Es resultieren Polyacrylnitrilfäden von grünstichig gelber Färbung, die hervorragende Echtheitseigenschaften aufweisen, insbesondere sehr gute Licht-, Wasch- und Dekaturechtheiten.

Beispiel 90

Ein Gewebe aus Polyacrylnitril wird mit einer Druckpaste der folgenden Zusammensetzung bedruckt:

30 g des in Beispiel 6 beschriebenen Farbstoffes,
30 g Thiodiethylenglykol,
30 g Cyclohexanol,
30 g 30%ige Essigsäure,
500 g Kristallgummi,
30 g wässrige Zinknitratlösung (d = 1,5 g/cm$^{-3}$) und
330 g Wasser

Der erhaltene brillante, grünstichig gelbe Druck wird getrocknet, 30 min gedämpft und anschliessend gespült. Er zeichnet sich durch gute Echtheitseigenschaften aus.

Beispiel 91

Sauer modifizierte Polyglykolterephthalatfasern, wie sie in der belgischen Patentschrift 549 179 und in der USA-Patentschrift 2 893 816 beschrieben sind, werden bei 20 °C und einem Flottenverhältnis 1:40 in ein Färbebad gegeben, das pro 1000 ml 3–10 g Natriumsulfat, 0,1–2 g Oleylpolyglykolether (enth. 50 ml Ethylenoxid), 0–15 g Dimethylbenzyldodecylammoniumchlorid und 0,3 g Farbstoff gemäss Beispiel 67 enthält und mit Essigsäure bzw. Natriumacetat auf einen pH-Wert von 4,5–5,5 eingestellt wurde. Man erhitzt innerhalb von 30 min auf 98 °C und hält das Bad 60 min bei dieser Temperatur. Nach dem anschliessenden Spülen und Trocknen der Fasern weisen diese eine brillante, grünstichig gelbe Färbung mit guten Echtheitseigenschaften auf.

Beispiel 92

In einem Färbebecher von 500 ml Inhalt, der sich in einem beheizten Wasserbad befindet, werden 0,2 g der Farbstofflösung gemäss Beispiel 81 nach Zusatz von 0,5 g Oleylpolyglykolether (enth. 50 mol Ethylenoxid) mit Wasser auf 500 ml aufgefüllt und der pH-Wert der Färbeflotte auf 4,5–5 eingestellt. In dieser Flotte werden 10 g Stückware aus sauer modifiziertem Polyamid ständig bewegt, während die Badtemperatur binnen 15 min auf 100 °C erhöht wird. Nach 15–20minütigem Färben bei Kochtemperatur wird das gefärbte Gut gespült und getrocknet, z.B. durch Bügeln oder bei 60–70 °C im Trockenschrank. Man erhält eine klare, grünstichig gelbe Färbung mit guten Echtheitseigenschaften.

Beispiel 93

Ein aus 60% Holzschliff und 40% ungebleichtem Sulfitzellstoff bestehender Trockenstoff wird im Holländer mit soviel Wasser angeschlagen und bis zum Mahlgrad 40° SR gemahlen, dass der Trockengehalt etwas über 2,5% liegt, und anschliessend mit Wasser auf exakt 2,5% Trockengehalt des Dickstoffes eingestellt. 200 g dieses Dickstoffes werden mit 5 g einer 0,25%igen wässrigen Lösung des Farbstoffes gemäss Beispiel 39 versetzt, ca. 5 min verrührt, 2% Harzleim und 4% Alaun, bezogen auf Trockenstoff, hinzugegeben und wiederum einige Minuten homogen verrührt. Man verdünnt die Masse mit ca. 500 g Wasser auf 700 ml und stellt hieraus in bekannter Weise durch Absaugen über einen Blattbildner Papierblätter her. Sie weisen eine intensive, grünstichig gelbe Färbung auf. Im Abwasser des Blattbildners ermittelt man fotometrisch (bei $\lambda_{max}$ = 430 nm) die Menge des nicht an das Papier gebundenen Farbstoffes zu ca. 2%. Beim Färben ungeleimter Papiermassen werden bei sonst gleicher Verfahrensweise ca. 3% nicht fixierten Farbstoffes festgestellt.

Ähnlich geringe Abwasseranfärbungen zeigen unter obigen Arbeitsbedingungen praktisch alle erfindungsgemässen Farbstoffe.

Beispiel 94

200 g eines analog Beispiel 93, jedoch ausschliesslich unter Verwendung von gebleichtem Sulfitzellstoff bereiteten 2,5%igen Dickstoffes (Mahlgrad 35° SR) werden mit 5 g einer 0,5%igen wässrigen Lösung der im Beispiel 81 hergestellten ca. 36%igen Farbstofflösung ($\lambda_{max}$ = 422 nm) versetzt und ohne Zusatz von Harzleim und Alaun zu Papier verarbeitet. Man erhält ein in kräftigem, klarem Gelbton eingefärbtes Blattpapier. Das Abwasser enthält laut fotometrischer Bestimmung nur ca. 3% des eingesetzten Farbstoffes. Erfolgt die Einfärbung der Papiermassen in Gegenwart von 2% Harzleim und 4% Alaun (vgl. Beispiel 93), so erhält man ein ähnliches Ergebnis, und nur ca. 2% des Farbstoffes verbleiben im Abwasser.

Beispiel 95

10 g des gemäss Beispiel 93 gefärbten Papiers werden in 200 g Wasser unter Zusatz von 0,2 g Natriumsulfit und 0,1 g Natriumhydrogensulfit 1 h auf 60 °C erwärmt. Die Papiermasse ist völlig entfärbt; sie kann erneuter Einfärbung und Papierherstellung zugeführt werden (Recycling).

Zum gleichen Ergebnis gelangt man bei Verwendung von 2% Natriumdithionit als Reduktionsmittel (60°/30 min) oder bei Einsatz von gefärbtem Sulfitzellstoff des Beispiels 94.

Beispiel 96

Zu einer Lösung von 94 g N-Ethyl-N-β-dimethylaminoethyl- 2-methyl- 4-aminobenzaldehyd in 100 g Essigsäure gibt man 51 g 1,4-Bis-cyanacetamino-benzol und erhitzt das Reaktionsgemisch unter Rühren 3–4 h auf 60–65 °C, bis die Ausgangsstoffe praktisch vollständig umgesetzt sind (Dünnschichtchromatographie an Kieselsäuregel; Laufmittel Chloroform/Methanol 9:1 v/v). Anschliessend versetzt man mit 100 g Wasser und erhält 345 g einer niedrigviskosen, lagerstabilen, ca. 45%igen Flüssigeinstellung des Farbstoffes der Formel

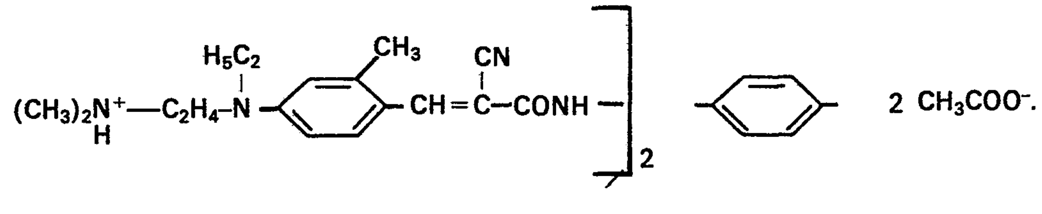

$\lambda_{max}$ = 439–440 nm in 50%iger Essigsäure.

Die Farbstofflösung ist unbegrenzt mit Wasser verdünnbar und eignet sich hervorragend zum Färben von Papierstoffen, insbesondere von gebleichtem Sulfit- und Sulfatzellstoff, in der Masse, wobei intensive, klare grünstichige Gelbtöne erzielt werden und die Abwässer praktisch farblos sind.

**Patentansprüche**

1. Kationische Styrylfarbstoffe der allgemeinen Formel

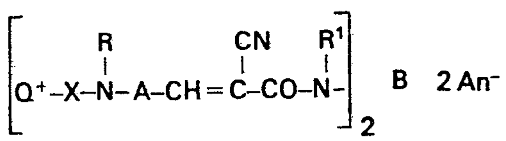

worin

$Q^+$ eine kationische Gruppierung,

X eine gegebenenfalls verzweigte Kette der Formel $C_nH_{2n}$, $C_nH_{2n}$–O–$C_mH_{2m}$, $C_nH_{2n}$–O–CO–$C_mH_{2m}$ oder $C_nH_{2n}$–O–CO–$CH_2$, die durch 1 oder 2 Cl, Hydroxy, $C_1$- bis $C_4$-Alkoxy oder Phenyl substituiert sein kann,

m und n unabhängig voneinander 2, 3 oder 4,

R Wasserstoff, Alkyl, Alkenyl, Aralkyl, Aryl, einen Rest der Formel –X–$Q^+$ $An^-$ oder durch Ringschluss mit –X–$Q^+$ und dem N-Atom einen Heterocyclus der Formel

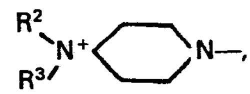

$R^2$ Wasserstoff, Alkyl, Alkenyl oder Aralkyl,

$R^3$ Alkyl oder

$R^2$ und $R^3$ gemeinsam $(CH_2)_4$ oder $(CH_2)_5$,

A eine 1,4-Arylengruppe, die gegebenenfalls durch Ringschluss mit N–R ein anelliertes Ringsystem ergibt,

$R^1$ Wasserstoff oder Alkyl,

B

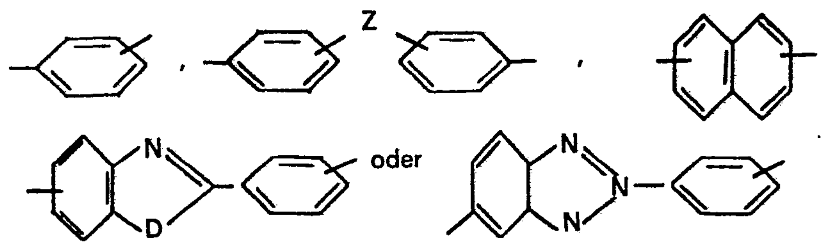

Z eine direkte Bindung oder ein Bindeglied aus der Reihe O,

S, 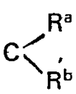, $(CH_2)_2$, CH=CH, $CH_2O$, $CH_2OCH_2$, $NR^a$, N=N, $NR^aCO$, $NR^aCONR^a$, $NR^aCO(CH_2)_{1-4}CONR^a$, $CONR^aCO$, NH–CO–CO–NH, $NR^aSO_2$, $CONR^a$

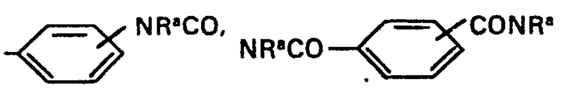

CO–NH–NH–CO und 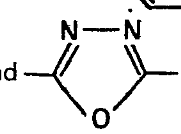

$R^a$ und $R^b$ unabhängig voneinander Wasserstoff, $C_1$- bis $C_2$-Alkyl und im Falle 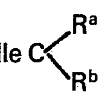 auch gemeinsam $(CH_2)_4$ oder $(CH_2)_5$,

D O, S oder $NR^a$ und

$An^-$ ein Anion bezeichnen, und

die cyclischen und acyclischen Substituenten, Bindeglieder und Brücken nichtionische Reste tragen können.

2. Kationische Styrylfarbstoffe der allgemeinen Formel

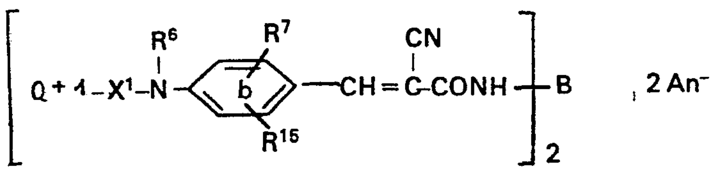

II,

worin $Q^{+1}$ für 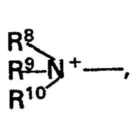, 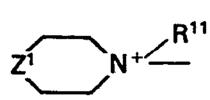 oder 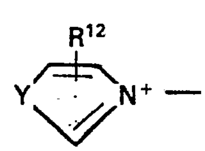 steht und worin

worin

$R^8$, $R^9$, $R^{10}$ und $R^{11}$ unabhängig voneinander für Wasserstoff, $C_1$- bis $C_4$-Alkyl, das durch Hydroxy, Amino, Formylamino, $C_1$- bis $C_4$-Alkoxy, Hydroxy-$C_2$- bis -$C_4$-alkoxy, Phenyl, Phenyloxy, $C_1$- bis $C_3$-Alkylcarbonyloxy, Fluor, Chlor oder Brom substituiert sein kann, und

$R^8$ zusätzlich für $C_1$- bis $C_4$-Alkoxy, Amino,

Formylamino, Phenyl, Cyclopentyl oder Cyclohexyl,

$Z^1$ für eine direkte Bindung, $CH_2$, $C_2H_4$, O, S, NH oder N–$C_1$- bis -$C_2$-Alkyl,

$R^{12}$ für 1–3 Reste aus der Reihe Wasserstoff, $C_1$- bis $C_4$-Alkyl, Fluor, Chlor oder Brom,

Y für O, S, NH, N–$C_1$- bis -$C_2$-Alkyl oder CH=CH,

$X^1$ für gegebenenfalls verzweigtes und/oder durch Hydroxy, $C_1$- bis $C_4$-Alkoxy oder Phenyl substituiertes $C_2$- bis $C_3$-Alkylen und

$R^6$ für gegebenenfalls durch Chlor, Cyan, $C_1$- bis $C_4$-Alkyloxy, Phenyl oder Phenyloxy substituiertes $C_1$- bis $C_4$-Alkyl, für Phenyl oder für den Rest –X–$Q^{+1}$ $An^-$ stehen oder

$R^6$ mit –X–$Q^{+1}$ und dem N-Atom, an das beide gebunden sind, gemeinsam ein Piperazinium-System der Struktur

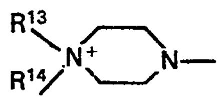 bilden,

$R^{13}$ für Wasserstoff, $C_1$- bis $C_4$-Alkyl, das durch $C_1$- bis $C_4$-Alkyloxy, Hydroxy, $C_1$- bis $C_3$-Alkylcarbonyloxy oder Phenyl substituiert sein kann,

$R^{14}$ für $C_1$- bis $C_4$-Alkyl oder

$R^{13}$ und $R^{14}$ gemeinsam für $(CH_2)_4$ oder $(CH_2)_5$ stehen oder

$R^6$ und $R^7$ gemeinsam mit dem Benzolring und dem Stickstoffatom, an das $R^6$ gebunden ist, Bestandteile eines gegebenenfalls im Heterocyclus durch 1–4 $C_1$- bis $C_4$-Alkylgruppen oder einen Phenylrest substituierten Indolin-, 1,2,3,4-Tetrahydrochinolin- oder 2,3-Dihydro-benzoxazin-(1,4)-Ringsystems sind oder

$R^7$ und $R^{15}$ unabhängig voneinander Wasserstoff, $C_1$- bis $C_2$-Alkyl, $C_1$- bis $C_2$-Alkyloxy, Brom oder Chlor bedeuten und worin B und $An^-$ die im Anspruch 1 angegebene Bedeutung haben, und die Phenylenkerne vorzugsweise als 1,3- oder 1,4-Phenylene vorliegen und die genannten Phenylreste, Phenylen-, Naphthylen- und kondensierten benzoiden Kerne zusätzlich durch 1–3 $C_1$- bis $C_4$-Alkyl, $C_1$- bis $C_4$-Alkyloxy-, $C_1$- bis $C_4$-Alkyloxycarbonyl-, Cyan- oder $CF_3$-Gruppen und/oder Br oder Cl substituiert sein können.

3. Kationische Styrylfarbstoffe der allgemeinen Formel

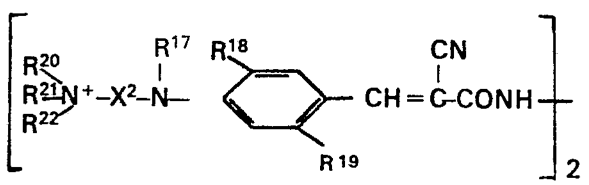 2 $An^-$ III,

worin

$An^-$ die in Anspruch 1 genannte Bedeutung hat,

$R^{20}$, $R^{21}$ und $R^{22}$ unabhängig voneinander für Wasserstoff, $C_1$- bis $C_4$-Alkyl, das durch Hydroxy, Amino, Formylamino, $C_1$- bis $C_4$-Alkoxy, Hydroxy-$C_2$- bis -$C_4$-alkoxy, Phenyl, Phenoxy, $C_1$- bis $C_3$-Alkylcarbonyloxy oder Chlor substituiert sein kann, und

$R^{20}$ zusätzlich für Phenyl oder Cyclohexyl oder

$R^{20}$, $R^{21}$ und $R^{22}$ zusammen mit dem quaternären Stickstoff für gegebenenfalls durch Methyl oder Ethyl substituiertes Pyridinium,

$X^2$ für gegebenenfalls verzweigtes $C_2$- bis $C_3$-Alkylen,

$R^{17}$ für gegebenenfalls durch Cyan, $C_1$- bis $C_4$-Alkyloxy, Phenyl oder Phenyloxy substituiertes $C_1$- bis $C_4$-Alkyl,

$R^{18}$ und $R^{19}$ unabhängig voneinander für Wasserstoff, $C_1$- bis $C_2$-Alkyl, $C_1$- bis $C_2$-Alkyloxy oder Chlor oder

$R^{17}$ und $R^{18}$ gemeinsam für die zur Bildung eines Dihydroindol-, 1,2,3,4-Tetrahydrochinolin- oder 2,3-Dihydrobenz[b]-oxazin-(1,4)-Systems erforderlichen Ringglieder, insbesondere für die Glieder $CH_2CH(CH_3)$, $C(CH_3)_2CH(CH_3)$, $CH_2CH_2CH(CH_3)$, $CH(CH_3)CH_2C(CH_3)_2$, $OCH_2CH_2$, $OCH_2CH(CH_3)$, $OCH_2CH(C_6H_5)$ oder $O(CH_3)_2CH(CH_3)$ stehen und

$B^1$ 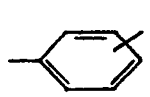 , 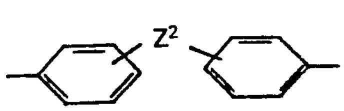 oder 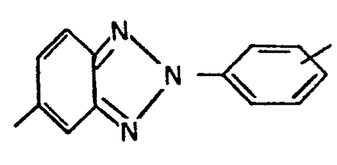

bedeuten, wobei die Phenylenreste 1,3- oder 1,4-verknüpft sind, zusätzlich 1–2 Reste aus der Reihe $CH_3$, $C_2H_5$, $CH_3O$, $C_2H_5O$ oder Cl tragen können und

$Z^2$ eine direkte Bindung oder die Brückenglieder

$(CH_2)_2$, CH=CH, 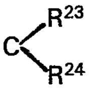 (mit $R^{23}$ und $R^{24}$ unabhängig voneinander gleich H, $CH_3$, $C_2H_5$ oder gemeinsam $(CH_2)_5$), $NR^{25}$ (mit $R^{25}$ = H, $CH_3$, $C_2H_5$) NHCO, NHCONH, CONHCO

oder 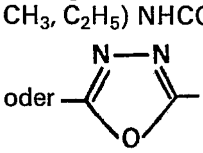 bezeichnet.

4. Kationische Styrylfarbstoffe der allgemeinen Formel

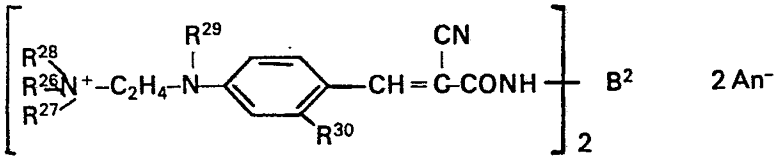

worin

$An^-$ die in Anspruch 1 genannte Bedeutung besitzt und

$R^{26}$, $R^{27}$ und $R^{28}$ unabhängig voneinander gleich H, Methyl, Ethyl, Propyl, Butyl, Hydroxyethyl, Hydroxypropyl, Formylaminoethyl, Formylaminopropyl, Aminoethyl, Aminopropyl oder

$R^{26}$, $R^{27}$ und $R^{28}$ zusammen mit dem quaternären Stickstoff für gegebenenfalls durch Methyl oder Ethyl substituiertes Pyridinium,

$R^{29}$ Methyl, Ethyl, Methoxyethyl, Ethoxyethyl, Cyanethyl, Phenyl, Benzyl, α- oder β-Phenylethyl, Phenyloxyethyl oder Phenyloxypropyl,

$R^{30}$ Wasserstoff oder Methyl und

$B^2$ 1,3- oder 1,4-Phenylen oder einen Rest der Formel

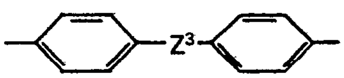

bedeuten, wobei die Phenylenreste durch 1–2 Methyl, Chlor oder Methoxy substituiert sein können, und

$Z^3$ eine direkte Bindung oder die Brückenglieder $CH_2$, $(CH_2)_2$, $C(CH_3)_2$, NHCO oder NHCONH bezeichnet.

5. Verfahren zur Herstellung kationischer Styrylfarbstoffe gemäss Anspruch 1, dadurch gekennzeichnet, dass man Verbindungen der Formel

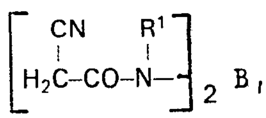

worin $R^1$ und B die in Anspruch 1 angegebenen Bedeutungen haben, mit Aldehyden der allgemeinen Formel

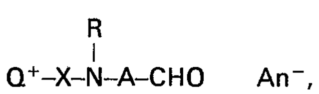

worin

$Q^+$, R, X, A und $An^-$ die in Anspruch 1 angegebenen Bedeutungen besitzen oder mit entsprechenden nichtquartären Aldehyden unter anschliessender Quaternierung kondensiert oder hierfür auch funktionelle Aldehydderivate einsetzt.

6. Verwendung von Farbstoffen gemäss Ansprüchen 1–4 zum Färben von natürlichen und synthetischen kationisch anfärbbaren Substraten und Massen, vorzugsweise zum Färben, Beschreiben und Bedrucken cellulosehaltiger Materialien, insbesondere von Papier in der Masse und in der Oberfläche.

**Revendications**

1. Colorants styryliques cationiques de formule générale

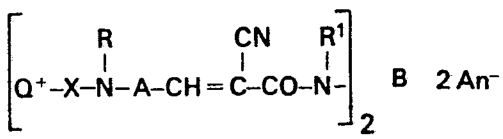

dans laquelle

$Q^+$ est un groupement cationique,

X est une chaîne éventuellement ramifiée de formule $C_nH_{2n}$, $C_nH_{2n}$–O–$C_mH_{2m}$, $C_nH_{2n}$–O–CO–$C_mH_{2m}$ ou $C_nH_{2n}$–O–CO–$CH_2$, qui peut être substituée par un ou deux substituants Cl, hydroxy, alkoxy, en $C_1$ à $C_4$ ou phényle,

m et n sont égaux, indépendamment l'un de l'autre, à 2, 3 ou 4.

R désigne l'hydrogène, un groupe alkyle, alcényle, aralkyle, aryle, un reste de formule $-X-Q^+$ $An^-$ ou forme par cyclisation avec $-X-Q^+$ et l'atome d'azote, un hétérocycle de formule

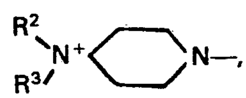

$R^2$ désigne l'hydrogène, un groupe alkyle, alcényle ou aralkyle,

$R^3$ est un groupe alkyle, ou bien

$R^2$ et $R^3$ forment en commun un groupe $(CH_2)_4$ ou $(CH_2)_5$,

A est un groupe 1,4-arylène qui forme éventuellement par cyclisation avec N–R un système cyclique condensé,

$R^1$ désigne l'hydrogène ou un groupe alkyle,

B est un groupe

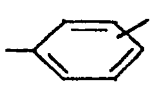 , 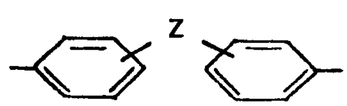 , 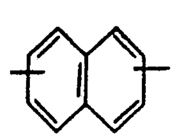

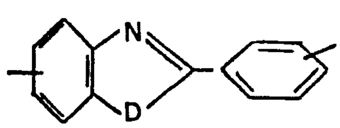 oder 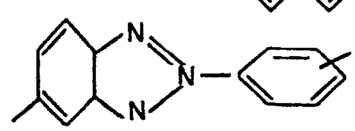

Z désigne une liaison simple ou un terme de liaison choisi dans la série

O, S, 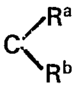 $(CH_2)_2$, CH=CH, $CH_2O$,

$CH_2OCH_2$, $NR^a$, N=N, $NR^aCO$, $NR^aCONR^a$, $NR^aCO(CH_2)_{1-4}CONR^a$, $CONR^aCO$, NH-CO-CO-NH, $NR^aSO_2$, $CONR^a$

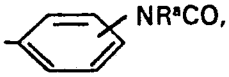 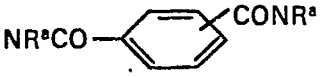

CO-NH-NH-CO et 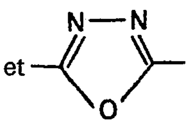

$R^a$ et $R^b$ désignent, indépendamment l'un de l'autre, l'hydrogène, un groupe alkyle en $C_1$ ou $C_2$ et, dans le cas de 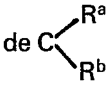 ils forment également en commun un groupe $(CH_2)_4$ ou $(CH_2)_5$,

D représente O, S ou un groupe $NR^a$ et

$An^-$ est un anion, et

les substituants cycliques et acycliques, les termes de liaison et les ponts peuvent porter des restes non ioniques.

2. Colorants styryliques cationiques de formule générale

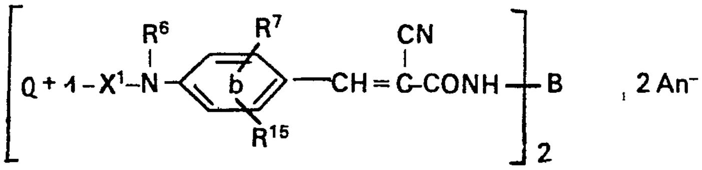

dans laquelle $Q^{+1}$ est un groupe

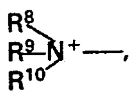, 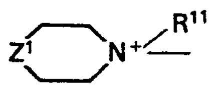 ou 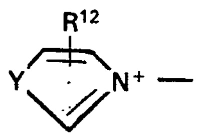 où

$R^8$, $R^9$, $R^{10}$ et $R^{11}$ désignent, indépendamment l'un de l'autre, l'hydrogène, un groupe alkyle en $C_1$ à $C_4$ qui peut être substitué par un radical hydroxy, amino, formylamino, alkoxy en $C_1$ à $C_4$, hydroxy-(alkoxy en $C_2$ à $C_4$), phényle, phényloxy, (Alkyle en $C_1$ à $C_3$)-carbonyloxy, fluoro, chloro ou bromo, et

$R^8$ représente en outre un groupe alkoxy en $C_1$ à $C_4$, amino, formylamino, phényle, cyclopentyle ou cyclohexyle,

$Z^1$ désigne une liaison simple, $CH_2$, $C_2H_4$, O, S, NH ou un groupe N-alkyle en $C_1$ ou $C_2$,

$R^{12}$ désigne 1 à 3 restes de la série hydrogène, alkyle en $C_1$ à $C_4$, fluor, chlore, ou brome,

Y représente O, S, NH, N-alkyle en $C_1$ ou $C_2$ ou CH=CH,

$X^1$ désigne un groupe alkylène en $C_2$ ou $C_3$ éventuellement ramifié et/ou substitué par un radical hydroxy, alkoxy en $C_1$ à $C_4$ ou phényle,

$R^6$ est un reste alkyle en $C_1$ à $C_4$ éventuellement substitué par un radical chloro, cyano, alkyloxy en $C_1$ à $C_4$, phényle ou phényloxy, le reste phényle ou le reste de formule $-X-Q^{+1}$ $An^-$ ou bien

$R^6$ forme conjointement avec le groupe $-X-Q^{+1}$ et l'atome d'azote, auquel tous deux sont liés, un noyau pipérazinium de formule

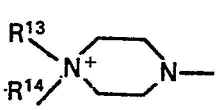

$R^{13}$ désigne l'hydrogène, un groupe alkyle en $C_1$ à $C_4$, qui peut être substitué par un radical alkyloxy en $C_1$ à $C_4$, hydroxy, (alkyle en $C_1$ à $C_3$)-carbonyloxy ou phényle,

$R^{14}$ est un groupe alkyle en $C_1$ à $C_4$ ou bien

$R^{13}$ et $R^{14}$ forment ensemble un groupe $(CH_2)_4$ ou $(CH_2)_5$ ou bien

$R^6$ et $R^7$ forment conjointement avec le noyau benzénique et l'atome d'azote auquel $R^6$ est lié, des composants d'un système cyclique d'indoline, de 1,2,3,4-tétrahydroquinoléine ou de 2,3-dihydrobenzoxazine-(1,4) éventuellement substitué dans l'hétérocycle par 1 à 4 groupes alkyle en $C_1$ à $C_4$ ou un reste phényle, ou bien

$R^7$ et $R^{15}$ représentent, indépendamment l'un de l'autre, l'hydrogène, un groupe alkyle en $C_1$ ou $C_2$, un groupe alkyloxy en $C_1$ ou $C_2$, le brome ou le chlore et

B et $An^-$ ont la définition indiquée dans la revendication 1, et

les noyaux phénylène se présentent avantageusement sous la forme de 1,3- ou de 1,4-phénylènes et les restes phényle, les noyaux phénylène, naphthylène et les noyaux benzéniques condensés mentionnés peuvent en outre être substitués par un à trois groupes alkyle en $C_1$ à $C_4$, (alkyloxy en $C_1$ à $C_4$)-carbonyle, cyano ou $CF_3$ et/ou atomes de Br ou Cl.

3. Colorants styryliques cationiques de formule générale

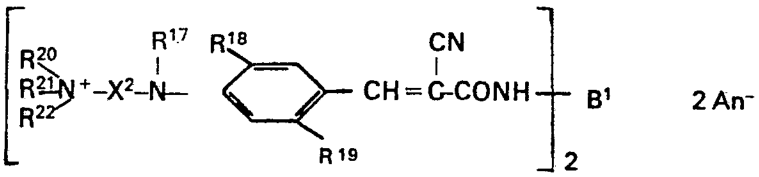

dans laquelle

An⁻ a la définition indiquée dans la revendication 1.

$R^{20}$, $R^{21}$ et $R^{22}$ représentent, indépendamment l'un de l'autre, l'hydrogène, un groupe alkyle en $C_1$ à $C_4$ qui peut être substitué par un radical hydroxy, amino formylamino, alkoxy en $C_1$ à $C_4$, hydroxy-(alkoxy en $C_2$ à $C_4$), phényle, phénoxy, (alkyle en $C_1$ à $C_3$)-carbonyloxy ou du chlore, et

$R^{20}$ représente en outre le groupe phényle ou cyclohexyle, ou bien

$R^{20}$, $R^{21}$ et $R^{22}$ forment conjointement avec l'azote quaternaire un groupe pyridinium éventuellement substitué par un radical méthyle ou éthyle,

$X^2$ est un groupe alkylène en $C_2$ ou $C_3$ éventuellement ramifié,

$R^{17}$ est un groupe alkyle en $C_1$ à $C_4$ éventuellement substitué par un radical cyano, alkyloxy en $C_1$ à $C_4$, phényle ou phényloxy,

$R^{18}$ et $R^{19}$ représentent, indépendamment l'un de l'autre, l'hydrogène, un groupe alkyle en $C_1$ ou $C_2$, un groupe alkyloxy en $C_1$ ou $C_2$ ou du chlore ou bien

$R^{17}$ et $R^{18}$ forment ensemble les chaînons nécessaires à la formation d'un noyau de dihydroindole, de 1,2,3,4-tétrahydroquinoléine ou de 2,4-dihydrobenz[b]-oxazine-(1,4), notamment les chaînons $CH_2CH(CH_3)$, $C(CH_3)_2CH(CH_3)$, $CH_2CH_2CH(CH_3)$, $CH(CH_3)CH_2C(CH_3)_2$, $OCH_2CH_2$, $OCH_2CH(CH_3)$, $OCH_2CH(C_6H_5)$ ou $O(CH_3)_2CH(CH_3)$ et

$B^1$ représente

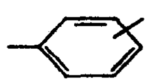 , 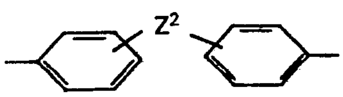 où 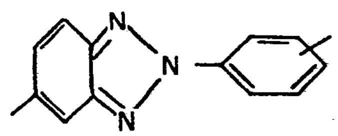

les restes phénylène étant en liaison 1,3 ou 1,4, et pouvant porter en outre un ou deux restes de la série $CH_3$, $C_2H_5$, $CH_3O$, $C_2H_5O$ ou Cl et

$Z^2$ désigne une liaison simple ou les ponts

$(CH_2)_2$, $CH=CH$, 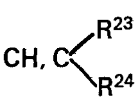 ($R^{23}$ et $R^{24}$ représentant, indépendamment l'un de l'autre, H, $CH_3$, $C_2H_5$ ou, en commun, $(CH_2)_5$, un groupe $NR^{25}$ ($R^{25}$ = H, $CH_3$, $C_2H_5$), NHCO, NHCONH, CONHCO ou

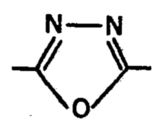

4. Colorants styryliques cationiques de formule générale

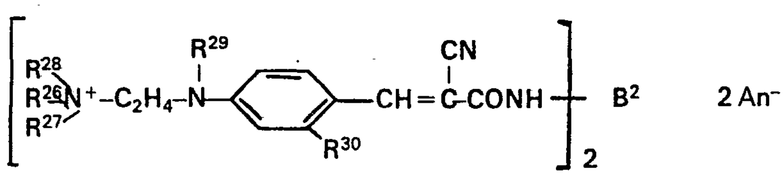

dans laquelle

An⁻ possède la définition mentionnée dans la revendication 1 et

$R^{26}$, $R^{27}$ et $R^{28}$ désignent, indépendamment l'un de l'autre, H, un groupe méthyle, éthyle, propyle, butyle, hydroxyéthyle, hydroxypropyle, formylaminoéthyle, formylaminopropyle, aminoéthyle, aminopropyle, ou bien

$R^{26}$, $R^{27}$ et $R^{28}$ forment conjointement avec l'atome d'azote quaternaire un noyau pyridinium éventuellement substitué par un radical méthyle ou éthyle,

$R^{29}$ désigne un groupe méthyle, éthyle, méthoxyéthyle, éthoxyéthyle, cyanéthyle, phényle, benzyle, α- ou β-phényléthyle, phényloxyéthyle ou phényloxypropyle,

$R^{30}$ désigne l'hydrogène ou le groupe méthyle et

$B^2$ est un groupe 1,3- ou 1,4-phénylène ou un reste de formule

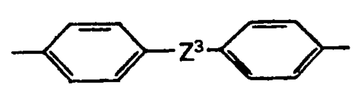

les restes phénylène pouvant être substitués par 1 ou 2 radicaux méthyle, chloro ou méthoxy, et

$Z^3$ désigne une liaison simple ou les ponts $CH_2$, $(CH_2)_2$, $C(CH_3)_2$, NHCO ou NHCONH.

5. Procédé de production de colorants styryliques cationiques suivant la revendication 1, caractérisé en ce qu'on condense des composés de formule:

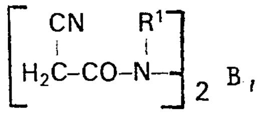

dans laquelle $R^1$ et B ont les définitions indiquées dans la revendication 1, avec des aldéhydes de formule générale

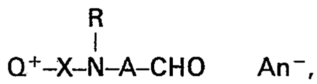

dans laquelle
$Q^+$, E, X, A et $An^-$ ont les définitions indiquées dans la revendication 1, ou avec des aldéhydes non quaternaires correspondants, en terminant par une quaternisation, ou bien on utilise également à cet effet des dérivés aldéhydiques fonctionnels.

6. Utilisation de colorants suivant les revendications 1–4 pour la teinture de substrats et de matières naturels et synthétiques susceptibles de teintures cationiques, de préférence pour teindre les matières contenant de la cellulose, porter des inscriptions sur elles ou les imprimer, notamment du papier, dans la masse et en surface.

## Claims

1. Cationic styryl dyestuffs of the general formula

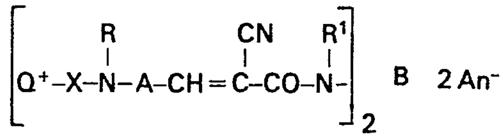

wherein
$Q^+$ designates a cationic grouping,
X designates an optionally branched chain of the formula $C_nH_{2n}$, $C_nH_{2n}$–O–$C_mH_{2m}$, $C_nH_{2n}$–O–CO–$C_mH_{2m}$ or $C_nH_{2n}$–O–CO–$CH_2$, which can be substituted by 1 or 2 Cl, hydroxyl, $C_1$- to $C_4$-alkoxy or phenyl,
m and n, independently of one another, designate 2, 3 or 4,
R designates hydrogen, alkyl, alkenyl, aralkyl, aryl, a radical of the formula –X–$Q^+$ $An^-$ or, by ring closure with –X–$Q^+$ and the N-atom, a heterocyclic structure of the formula

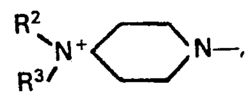

$R^2$ designates hydrogen, alkyl, alkenyl or aralkyl,
$R^3$ designates alkyl or
$R^2$ and $R^3$ together designate $(CH_2)_4$ or $(CH_2)_5$,
A designates a 1,4-arylene group, which optionally gives a fused ring system by ring closure with N–R,
$R^1$ designates hydrogen or alkyl,
B designates

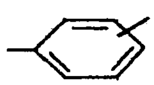
,
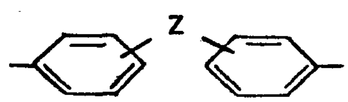
,
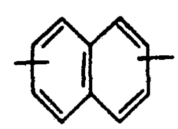

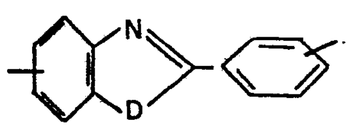
or
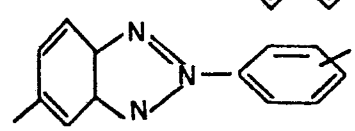

Z designates a direct bond or a connecting member from the series O,
S, 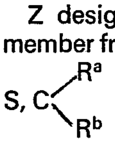 $(CH_2)_2$, CH=CH, $CH_2O$, $CH_2OCH_2$,
$NR^a$, N=N, $NR^aCO$, $NR^aCONR^a$,
$NR^aCO(CH_2)_{1-4}CONR^a$, $CONR^aCO$,
NH–CO–CO–NH, $NR^aSO_2$, $CONR^a$

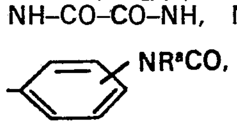
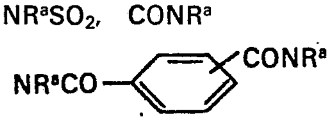

CO–NH–NH–CO and 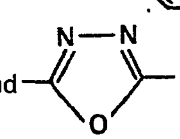

$R^a$ and $R^b$, independently of one another, designate hydrogen, $C_1$- to $C_2$-alkyl and

in the case of 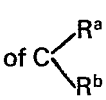 also together designate $(CH_2)_4$ or $(CH_2)_5$,

D designates O, S or $NR^a$ and
$An^-$ designates an anion, and
the cyclic and acyclic substituents, connecting members and bridges can carry non-ionic radicals.

2. Cationic styryl dyestuffs of the general formula

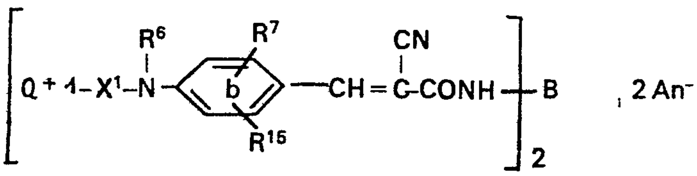

wherein

$Q^{+1}$ represents 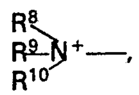, 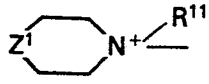 or 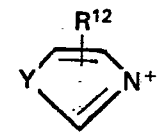 and

wherein

$R^8$, $R^9$, $R^{10}$ and $R^{11}$ independently of one another denote hydrogen, $C_1$- to $C_4$-alkyl, which can be substituted by hydroxyl, amino, formylamino, $C_1$- to $C_4$-alkoxy, hydroxy-$C_2$- to $C_4$-alkoxy, phenyl, phenyloxy, $C_1$- to $C_3$-alkylcarbonyloxy, fluorine, chlorine or bromine, and

$R^8$ additionally represents $C_1$- to $C_4$-alkoxy, amino, formylamino, phenyl, cyclopentyl or cyclohexyl,

$Z^1$ represents a direct bond, $CH_2$, $C_2H_4$, O, S, NH or N–$C_1$- to $C_2$-alkyl,

$R^{12}$ represents 1 to 3 radicals from the series comprising hydrogen, $C_1$- to $C_4$-alkyl, fluorine, chlorine or bromine,

Y represents O, S, NH, N–$C_1$- to $C_2$-alkyl or CH=CH,

$X^1$ represents $C_2$- to $C_3$-alkylene, which is optionally branched and/or substituted by hydroxyl, $C_1$- to $C_4$-alkoxy or phenyl, and

$R^6$ represents $C_1$- to $C_4$-alkyl, which is optionally substituted by chlorine, cyano, $C_1$- to $C_4$-alkyloxy, phenyl or phenyloxy, or $R^6$ represents phenyl or the radical $-X-Q^{+1}An^-$, or

$R^6$ with $-X-Q^{+1}$ and the N atom, to which both are bonded, together form a piperazinium system of the structure

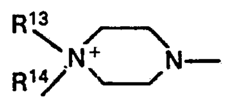

$R^{13}$ represents hydrogen or $C_1$- to $C_4$-alkyl, which can be substituted by $C_1$- to $C_4$-alkyloxy, hydroxyl, $C_1$- to $C_3$-alkylcarbonyloxy or phenyl,

$R^{14}$ represents $C_1$- to $C_4$-alkyl, or

$R^{13}$ and $R^{14}$ together represent $(CH_2)_4$ or $(CH_2)_5$, or

$R^6$ and $R^7$, together with the benzene ring and the nitrogen atom to which $R^6$ is bonded, are constituents of an indoline, 1,2,3,4-tetrahydroquinoline or 2,3-dihydro-1,4-benzoxazine ring system, which is optionally substituted in the heterocyclic ring by 1 to 4 $C_1$- to $C_4$-alkyl groups or by a phenyl radical, or

$R^7$ and $R^{15}$, independently of one another, denote hydrogen, $C_1$- to $C_2$-alkyl, $C_1$- to $C_2$-alkyloxy, bromine or chlorine, and wherein

B and $An^-$ have the meaning indicated in Claim 1, and the phenylene nuclei are preferably present as 1,3- or 1,4-phenylene, and the stated phenyl radicals, phenylene, naphthylene and fused benzoid nuclei can additionally be substituted by 1–3 $C_1$- to $C_4$-alkyl, $C_1$- to $C_4$-alkyloxy, $C_1$- to $C_4$-alkyloxycarbonyl, cyano or $CF_3$ groups and/or Br or Cl.

3. Cationic styryl dyestuffs of the general formula

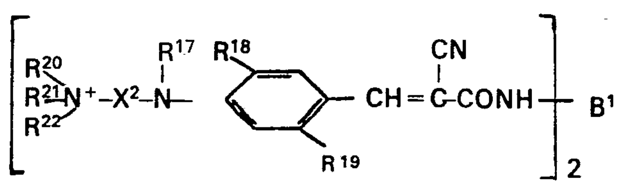 $2 An^-$

wherein

$An^-$ has the meaning indicated in Claim 1,

$R^{20}$, $R^{21}$ and $R^{22}$, independently of one another, respresent hydrogen, $C_2$- to $C_4$-alkyl, which can be substituted by hydroxyl, amino, formylamino, $C_1$- to $C_4$-alkoxy, hydroxy-$C_2$- to $C_4$-alkoxy, phenyl, phenoxy, $C_1$- to $C_3$-alkylcarbonyloxy or chlorine, and

$R^{20}$ additionally represents phenyl or cyclohexyl, or

$R^{20}$, $R^{21}$ and $R^{22}$, together with the quaternary nitrogen, represent pyridinium which is optionally substituted by methyl or ethyl,

$X^2$ represents optionally branched $C_2$- to $C_3$-alkylene,

$R^{17}$ represents $C_1$- to $C_4$-alkyl which is optionally substituted by cyano, $C_1$- to $C_4$-alkyloxy, phenyl or phenyloxy,

$R^{18}$ and $R^{19}$, independently of one another, represent hydrogen, $C_1$- to $C_2$-alkyl, $C_1$- to $C_2$-alkyloxy or chlorine or

$R^{17}$ and $R^{18}$ together represent the ring members necessary for the formation of a dihydroindole, 1,2,3,4-tetrahydroquinoline or 2,3-dihydrobenz-[b]-1,4-oxazine system, particularly the members $CH_2CH(CH_3)$, $C(CH_3)_2CH(CH_3)$, $CH_2CH_2CH(CH_3)$, $CH(CH_3)CH_2C(CH_3)_2$, $OCH_2CH_2$, $OCH_2CH(CH_3)$, $OCH_2CH(C_6H_5)$ or $O(CH_3)_2CH(CH_3)$, and

$B^1$ denotes

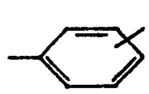, 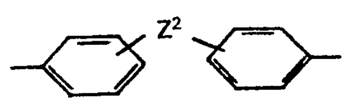 or 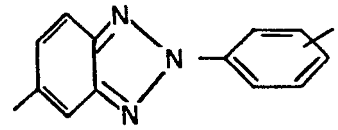

wherein

the phenylene radicals are 1,3- or 1,4-linked and can carry, in addition, 1 to 2 radicals from the series comprising $CH_3$, $C_2H_5$, $CH_3O$, $C_2H_5O$ or Cl, and $Z^2$ designates a direct bond or the bridge members

$(CH_2)_2$, CH=CH, 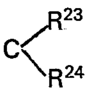 (with $R^{23}$ and $R^{24}$, independently of one another, being H, $CH_3$ or $C_2H_5$ or, together, $(CH_2)_5$), $NR^{25}$ (with $R^{25}$ = H, $CH_3$ or $C_2H_5$), NHCO, NHCONH, CONHCO or

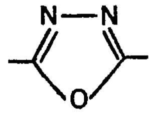

4. Cationic styryl dyestuffs of the general formula

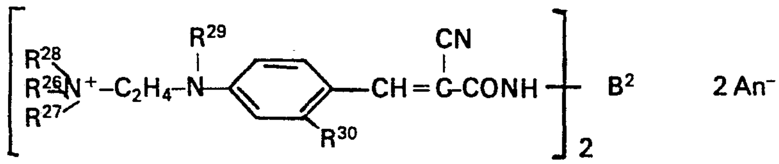

wherein

$An^-$ has the meaning mentioned in Claim 1, and

$R^{26}$, $R^{27}$ and $R^{28}$, independently of one another, are H, methyl, ethyl, propyl, butyl, hydroxyethyl, hydroxypropyl, formylaminoethyl, formylaminopropyl, aminoethyl or aminopropyl, or

$R^{26}$, $R^{27}$ and $R^{28}$ together with the quaternary nitrogen represent pyridinium, which is optionally substituted by methyl or ethyl,

$R^{29}$ denotes methyl, ethyl, methoxyethyl, ethoxyethyl, cyanoethyl, phenyl, benzyl, α- or β-phenylethyl, phenyloxyethyl or phenyloxypropyl,

$R^{30}$ denotes hydrogen or methyl, and

$B^2$ denotes 1,3- or 1,4-phenylene, or a radical of the formula

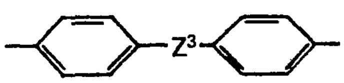

wherein

the phenylene radicals can be substituted by 1 to 2 methyl, chlorine or methoxy, and

$Z^3$ designates a direct bond or the bridge members $CH_2$, $(CH_2)_2$, $C(CH_3)_2$, NHCO or NHCONH.

5. Process for the preparation of cationic styryl dyestuffs according to Claim 1, characterised in that compounds of the formula

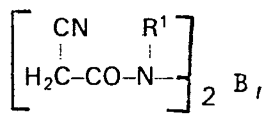

wherein

$R^1$ and B have the meanings given in Claim 1, are condensed with aldehydes of the general formula

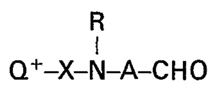 $An^-$,

wherein

$Q^+$, R, X, A and $An^-$ have the meanings given in Claim 1, or with appropriate non-quaternary aldehydes, with final quaternisation, or functional aldehyde derivatives are also used for this purpose.

6. Use of dyestuffs according to Claims 1–4 for dyeing natural and synthetic cationically dyeable substrates and pulps, preferably for dyeing, writing on and printing cellulose-containing materials, particularly paper in the form of pulp and as a surface.